# EUROPEAN PATENT SPECIFICATION

(11) **EP 3 733 461 B1**
(45) Date of publication and mention of the grant of the patent: **10.01.2024**
(21) Application number: 19171794.1
(22) Date of filing: 30.04.2019
(51) Int. Cl.: B60S 1/02, B60S 1/56, G02B 27/00

(54) **CLEANING DEVICE HAVING MULTI LAYER STRUCTURE AND METHOD OF OPERATING THE SAME**
REINIGUNGSVORRICHTUNG MIT MEHRSCHICHTSTRUKTUR UND VERFAHREN ZUM BETREIBEN DERSELBEN
DISPOSITIF DE NETTOYAGE POSSÉDANT UNE STRUCTURE MULTICOUCHES ET SON PROCÉDÉ DE FONCTIONNEMENT

(43) Date of publication of application: 04.11.2020
(73) Proprietor: Myongji University Industry and Academia Cooperation Foundation, Yongin-si, Gyeonggi-do 17058 (KR)
(72) Inventor: CHUNG, Sang Kug, Gyeonggi-do 16892 (KR); LEE, Kang Yong, Gyeonggi-do 10498 (KR)
(74) Representative: Botti & Ferrari S.p.A.

(56) References cited:
- EP-A1- 3 375 537
- EP-A2- 3 460 460
- WO-A1-2015/011064
- US-A1- 2008 107 542
- US-A1- 2018 275 397

## Description

### BACKGROUND

### 1. Field of the Invention

The present disclosure relates to a cleaning device having a multi layer structure and a method of operating the same.

### 2. Description of the Related Art

Recently, the wider adoption of automotive electrical units and smart vehicles has led to the advent of head-up-display HUD technology that projects various vehicle data onto a vehicle's windshield and to efforts to replace windshields with transparent displays.

Accordingly, it has become important to develop a cleaning technology that allows efficient removal of foreign objects such as raindrops and dust occurring on a windshield, or a transparent display that will replace it.

Currently, most vehicles typically use wipers to remove contaminants. However, the back-and-forth motion of the wiper blades across the windshield glass not only keeps blocking the driver's vision, but it only allows a limited area to be wiped as the blades move in an arc. Additionally, since old wiper blades cause friction-induced noise and a decline in wiping performance, wipers have to be replaced periodically.

Additionally, devices like cameras are exposed to the external environment. Therefore, when it rains or when water gets on a camera, a water droplet ends up adhering to the camera surface. Such an event inevitably causes a significant deterioration in the camera's performance because the camera has no specific feature in place to remove the droplet.

Furthermore, for a small camera to maintain a clear view, a droplet occurring on the lens surface should be immediately removed, but continuous operation of the camera's cleaning system for the purpose can result in not only unnecessary energy use but also the system's shortened service life. Therefore, cleaning systems used in small cameras require a droplet detection technology that only operates when a droplet occurring on the lens surface is detected.

Document 1 (EP 3 460 460 A2) discloses an apparatus and a method fo r cleaning glass used in cars and cameras, comprising glass, multiple electrodes placed in series on top of the glass, a dielectric layer stacked on top of the ele ctrodes, and a hydrophobic layer stacked on top of the dielectric layer and on whose surface a droplet forms.

Document 2 (US 2008/107542 A1) discloses a device for moving a macr o-volume of fluid across a surface, comprising an array of electrodes to form a moving electric field on the surface, and a motivator to selectively apply varyin g voltages to selected electrodes within said array of electrodes, the varying volt ages forming the moving electric field on the surface, wherein the moving electr ic field moves the macro-volumes of fluid across the surface.

A cleaning device capable of removing droplets by using small power, especially with strong durability has been required. A droplet sensing technique for driving the cleaning device only when the cleaning device senses droplets formed on a lens of the cleaning device has been also required.

### SUMMARY

The invention provides a technology for removing droplets, dust or frost forming on a glass used in a vehicle or a camera by applying the electrowetting-on-dielectric technique.

Additionally, the invention provides a camera droplet detection apparatus and method for detecting droplets on cover glass of a camera by using the impedance of the cover glass or an image photographed by the camera.

Furthermore, the invention provides a cleaning device of removing conductive droplets forming on glass surface using the principle of electrowetting-on-dielectric and of removing nonconductive droplets on the glass surface using the principle of dielectrophoresis.

Moreover, the invention provides a cleaning device including a hydrophobic layer which has strong durability.

Furthermore, the invention provides a cleaning device having a multi layer structure in which a lower electrode is disposed between upper electrodes to enhance droplet removal efficiency.

Moreover, the invention provides a cleaning device for enhancing droplet removal efficiency by disposing widely electrodes under a triple contact line and a method of operating the same.

A cleaning device according to one embodiment of the invention comprises a substrate; and multi layers disposed sequentially on the substrate. The multi layers include a first layer configured to have first electrodes formed on the substrate and a first dielectric layer covering the first electrodes; and a second layer configured to have second electrodes formed on the first dielectric layer and a second dielectric layer covering the second electrodes, and wherein the first electrodes are disposed in a specific interval, the second electrodes are disposed in a certain interval, the first electrodes located between the second electrodes, a droplet formed on a surface of the cleaning device is removable when a voltage is applied to at least one of the first electrodes and the second electrodes, and wherein an interface on which the droplet is contact with a surface of the cleaning device is defined as a triple contact line, the first electrode or the second electrode locates under every triple contact line, the first electrode and the second electrode are disposed in parallel or the first electrode crosses over the second electrode, and a first electrode to which a positive voltage is applied is alternately disposed with a first electrode to which a ground voltage or a negative voltage is applied, and a second electrode to which a positive voltage is applied is alternately disposed with a second electrode to which a ground voltage or a negative voltage is applied.

A cleaning device according to another embodiment of the invention comprises a substrate; and multi layers disposed sequentially on the substrate. The multi layers include a first layer configured to have first electrodes formed on the substrate and a first dielectric layer covering the first electrodes; and a second layer configured to have second electrodes formed on the first dielectric layer and a second dielectric layer covering the second electrodes, and wherein the first electrodes are disposed in a specific interval, the second electrodes are disposed in a certain interval, the first electrodes located between the second electrodes, a droplet formed on a surface of the cleaning device is removable when a voltage is applied to at least one of the first electrodes and the second electrodes, and wherein an interface on which the droplet is contact with a surface of the cleaning device is defined as a triple contact line, the first electrode or the second electrode locates under every triple contact line, the first electrode and the second electrode are disposed in parallel or the first electrode crosses over the second electrode. The cleaning device further comprises a hydrophobic layer formed on the second dielectric layer and a voltage application unit configured to apply an alternating current voltage to the first electrodes and the second electrodes. The droplet oscillates continuously according as the alternating current voltage is applied to the electrodes, and the droplet is removed after moved in a specific direction depending on the oscillation.

A cleaning device according to still another embodiment of the invention comprises a substrate; and multi layers disposed sequentially on the substrate. The multi layers include a first layer configured to have first electrodes formed on the substrate and a first dielectric layer covering the first electrodes; and a second layer configured to have second electrodes formed on the first dielectric layer and a second dielectric layer covering the second electrodes, and wherein the first electrodes are disposed in a specific interval, the second electrodes are disposed in a certain interval, the first electrodes located between the second electrodes, a droplet formed on a surface of the cleaning device is removable when a voltage is applied to at least one of the first electrodes and the second electrodes, and wherein an interface on which the droplet is contact with a surface of the cleaning device is defined as a triple contact line, the first electrode or the second electrode locates under every triple contact line, the first electrode and the second electrode are disposed in parallel or the first electrode crosses over the second electrode. The cleaning device further comprises a voltage application unit configured to apply a high frequency alternating current voltage to the first electrodes and the second electrodes based on a preset reference frequency and a switching unit configured to switch the applied high frequency alternating current voltage. A low frequency alternating current voltage is generated by switching the high frequency alternating current voltage, and conductive droplets and nonconductive droplets are removable according as the high frequency alternating current voltage and the low frequency alternating current voltage generate in one period.

According to one embodiment, the invention provides a smart self-cleaning glass for automobiles which can quickly and effectively remove contaminants such as raindrops, dust, and frost occurring on a windshield glass of a vehicle.

Furthermore, in the cleaning device, since the orientation of the electrodes is identical to the direction in which the droplet moves, the cleaning device can speed up removal of the droplet and lower the voltage applied to the electrodes.

Moreover, by eliminating the need for periodic replacement of a cleaning device structure, it can significantly lower the risk of accident.

Moreover, the cleaning device can not only help the driver drive safely by ensuring a clear vision even in adverse weather conditions, but it can also contribute to a vehicle's fuel efficiency by reducing the vehicle's weight and air resistance.

According to one embodiment of the invention, the camera droplet detection apparatus and method may detect droplets occurring on surface of a camera cover glass by using the impedance of the camera cover glass or using an image taken by the camera.

According to one embodiment of the invention, the cleaning device may remove not only conductive droplets on the surface but also non-conductive droplets on the surface by using the principles of electrowetting-on-dielectric and dielectrophoresis.

Furthermore, an advantage of the invention is to provide fast response and reduced energy consumption by applying the electrowetting-on-dielectric and dielectrophoresis techniques, which allows the apparatus to be applied or used in a wide range of areas, including vehicle windshields and internet of things image sensors, as well as small cameras for automotive and mobile applications.

Additionally, a hydrophobic layer used in the cleaning device of the invention includes fluorinated material and silane material, the hydrophobic layer may have stronger durability than the conventional hydrophobic layer.

Moreover, the cleaning device of the invention includes an adhesion layer and is adhered to another device through the adhesion layer, and thus it may remove droplets while adhered to another device not including a cleaning function.

Furthermore, the cleaning device of the invention has multi layers, a lower electrode being disposed between upper electrodes to enhance droplet removal efficiency.

In addition, the cleaning device disposes widely electrodes under a triple contact line, thereby enhancing the droplet removal efficiency.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a cleaning device according to one embodiment of the invention;
FIG. 2 and 3 are views illustrating the structure of the cleaning device according to one embodiment of the invention;
FIG. 4 is a flow chart illustrating a cleaning process according to one embodiment of the invention;
FIG. 5 is a flow chart illustrating a cleaning process according to another embodiment of the invention;
FIG. 6 is a view illustrating the actual cleaning process of the cleaning device according to another embodiment of the invention;
FIG. 7 is a scene in which the cleaning device is actually used according to one embodiment of the invention;
FIG. 8 is a view illustrating a droplet removal process of the cleaning device according to one embodiment of the invention;
FIG. 9 is a view schematically illustrating the structure of the cleaning device according to an unclaimed embodiment of the invention;
FIG. 10 is a view illustrating the pattern of electrodes according to one embodiment of the invention;
FIG. 11 is a view illustrating the flow of a droplet when the droplet is removed according to one embodiment of the invention;
FIG. 12 is a view illustrating a variation in the contact angle of a droplet when the droplet is removed according to one embodiment of the invention;
FIG. 13 is a view illustrating the result of a droplet removal experiment;
FIG. 14 is a view schematically illustrating the electrodes of the cleaning device according to an unclaimed embodiment of the invention;
FIG. 15 is a view illustrating a process of droplet removal by the cleaning device according to one embodiment of the invention;
FIG. 16 is a view illustrating the pattern of electrodes according to one embodiment of the invention;
FIG. 17 is a view illustrating the flow of a droplet when the droplet is removed according to one embodiment of the invention;
FIG. 18 is a view illustrating a variation in the contact angle of a droplet when the droplet is removed according to one embodiment of the invention;
FIG. 19 is a view illustrating the flow of a droplet when the droplet is removed according to another embodiment of the invention;
FIG. 20 and FIG. 21 are views illustrating the results of a droplet removal experiment;
FIG. 22 is a view schematically illustrating the structure of the camera droplet detection apparatus according to a preferred embodiment of the invention;
FIG. 23 is a view illustrating a variation in the impedance of the camera cover glass depending on the presence of a droplet;
FIG. 24 is a view illustrating an example of an image photographed when a droplet occurs on the camera cover glass;
FIG. 25 is a flow chart illustrating the camera droplet detection method according to one embodiment of the invention;
FIG. 26 is a flow chart illustrating the camera droplet detection method according to another embodiment of the invention;
FIG. 27 is a view illustrating the cleaning device according to one embodiment of the invention;
FIG. 28 is a view illustrating the pattern of the electrodes of the cleaning device according to one embodiment of the invention;
FIG. 29 is a view schematically illustrating the structure of the cleaning device according to one embodiment of the invention;
FIG. 30 to FIG. 33 are views explaining the cleaning device according to one embodiment of the invention;
FIG. 34 is a flow chart illustrating the cleaning method according to one embodiment of the invention;
FIG. 35 is a view illustrating schematically a structure of a cleaning device according to an unclaimed embodiment of the invention;
FIG. 36 is a view illustrating schematically a process of manufacturing a hydrophobic layer according to one embodiment of the invention;
FIG. 37 is a sectional view illustrating a sticker type cleaning device according to an unclaimed embodiment of the invention;
FIG. 38 and FIG. 39 are views illustrating a process of removing droplet;
FIG. 40 is a sectional view illustrating a cleaning device according to the invention;
FIG. 41 is a sectional view illustrating array of electrodes according to the invention;
FIG. 42 is a view for describing triple contact line;
FIG. 43 is a view illustrating a process of removing droplet;
FIG. 44 is a view illustrating a process of removing dust; and
FIG. 45 is a view illustrating a process of removing small scale droplet.

### DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a unit for processing at least one function or action and may be implemented as hardware, software, or a combination of hardware and software.

The invention relates to a cleaning device for self-cleaning droplets like raindrops and fog, as well as dust and frost and a method of removing the droplets in the same. The cleaning device may be either a standalone device or a device combined with another device.

In one embodiment, the cleaning device can be a device including external glass, for instance, a vehicle camera, a digital camera, a mobile camera, or an image sensor for Internet-of Things IoT. Of course, the cleaning device is not limited to the camera but includes all devices which require droplets to be removed.

In another embodiment, a cleaning structure may correspond to a vehicle's windshield.

Of course, the cleaning structure is not limited to cameras and vehicle windshields but various modifications can be made insofar as the cleaning structure may remove droplets.

The cleaning device is exposed to the external environment, resulting in the adhesion of droplets such as raindrops to the surface of the cleaning device.

Previously, no conventional method may remove raindrops once those raindrops get stuck on glass surfaces, such as those of cameras, inevitably leading to performance degradation of the camera. For vehicles that control certain features using camera images, the degradation of image quality due to droplets may cause vehicle accident.

Furthermore, in conventional methods, since raindrops stuck on a vehicle windshield glass got removed using wipers, delayed replacement of wipers could increase the risk of accidents.

Therefore, droplets should be immediately removed after the droplets get stuck on surfaces, and the invention provides a cleaning device which may remove droplets immediately after the droplets adhere to surfaces.

Furthermore, the invention becomes a technology, which may substitute for wipers without replacing the wipers, by removing droplets immediately after the droplets are adhere to a surface. The invention provides a cleaning structure which may remove droplets immediately after the droplets are adhere to the surface while lowering the risk of accidents.

In one embodiment, the cleaning device uses the electrowetting technique to remove droplets, dust, or frost. Particularly, the cleaning device may remove droplets, dust or frost on its surface by applying a certain voltage to the electrodes. The cleaning device may remove the droplets and micro droplets and remove easily the droplets irrespective of PH and viscosity of the droplet. Here, the method of applying the above-described voltage include an alternating current method in which a certain voltage is applied to all the electrodes, and a direct current method in which a certain voltage is applied to the electrodes in sequential order.

Viewed from another perspective, the cleaning device may remove the droplets by causing an oscillation on a surface. An oscillation occurring on the surface of the cleaning device reduces the force of adhesion between the droplet and the surface, allowing the droplet to move in the direction of gravity to be removed. For example, the surface of a cleaning device featured on a vehicle camera is tilted in the direction of gravity, which means that, if the force of adhesion between the droplet and surface weakens, the droplet will move in the direction of gravity, resulting in the droplet being separated from the cleaning device and then removed.

Viewed from the perspective of vehicle control, a raindrop may adhere to the surface of the camera when it rains. When the driver enters a rain removal command (droplet removal command), the control unit (not shown) may remove the raindrop by applying a certain voltage to the electrodes placed on the surface. The voltage may be supplied, for instance, from a vehicle battery to the camera. Meanwhile, the control unit may be one of the vehicle's ECUs (electronic control unit).

Hereinafter, embodiments of the invention will be described in detail with reference to accompanying drawings. It is, however, to be understood that the object to be removed includes only droplets as a matter of convenience and is in no way limited to droplets, but dust and frost, in addition to droplets including micro droplets may be also removed.

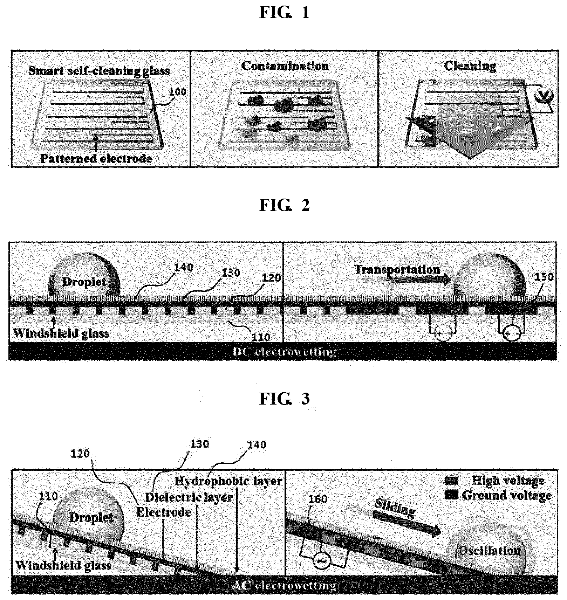

FIG. 1 is a view illustrating a cleaning device according to one embodiment of the invention.

The cleaning device 100 of the present embodiment may be applied to a front windshield of a vehicle or a camera as shown in FIG. 1.

The cleaning device 100 features a patterned structure of multiple electrodes separate from one another on top of a microchip manufactured through the MEMS process.

In one embodiment of cleaning, the cleaning device 100 may change the surface tension of a droplet by applying differing direct current voltages (high and ground) to the respective electrodes.

As a result, the droplet will move in a direction of electrodes to which a ground voltage and a high voltage are applied, i.e., towards an outer edge of a substrate (windshield of the vehicle) as shown in FIG. 1.

In another embodiment of cleaning, the cleaning device 100 may change the surface tension of a droplet by causing the droplet to oscillate by application of an alternating current voltage, e.g. a low-frequency alternating current voltage to the electrodes. Here, the alternating current voltage is not limited to the low frequency alternating current voltage.

For example, since the windshield has some degree of slope relative to the flat surface, a droplet will move downwards while oscillating i.e., towards the outer edge of the windshield.

Particularly, an area of the droplet contacted with the surface of the cleaning device 100 changes (shakes) continuously so that the droplet oscillates when the low frequency alternating current voltage of hundreds Hz or less, e.g. 50Hz is applied to the electrode in the cleaning device 100. As a result, a force of adhesion between the droplet and the surface of the cleaning device 100 gets continuously reducing, and so the droplet is removed after moved. Specially, the oscillation method may remove a droplet smaller than 20µℓ as well as a droplet more than 20µℓ*,* in real remove also a droplet having femto-size. A real size of raindrop is 20µℓ or less.

The droplet spreads out in a longitudinal direction when a high frequency (for example, more than 10kHz) voltage is applied to the electrode, and thus the droplet is not removed because the droplet slide little. Accordingly, the droplet does not slide in a gravitational direction except when the substrate is tilted by considerable high angle, or only the droplet more than 20µℓ may be removed after sliding. That is, it is impossible to remove really the raindrop when the high frequency voltage is applied.

The following is a description of the structure of the cleaning device 100 with reference to FIG. 2 and FIG. 3.

FIG. 2 and 3 are views illustrating the structure of the cleaning device according to one embodiment of the invention.

The cleaning device 100 may include a substrate 110 (for example, windshield glass or camera glass), one or more electrodes 120, a dielectric layer 130, a hydrophobic layer 140, and a direct current voltage application unit 150.

The substrate 110 is the bottommost layer of the cleaning device 100.

Meanwhile, the electrodes 120 are transparent electrodes and may form a certain pattern as they are placed in series on top of the substrate 110.

Here, the electrodes 120 may form a straight line, a stream line, or a hook shape and there is no limit to what type of pattern may be formed by the multiple electrodes 120.

Meanwhile, as shown in FIG. 2 and FIG. 3, the dielectric layer 130 may be disposed on the electrodes 120 and fill the gaps between the respective electrodes 120.

For reference, the dielectric layer 130 may contain more than one type of material selected from a group including parylene C, teflon, and metal oxides.

The hydrophobic layer 140 is the uppermost layer of the cleaning device 100, has a droplet form on its surface, and may be made up of a fluid like water and material with low hydrophilicity.

Therefore, the droplet may move smoothly on the surface of the hydrophobic layer 140.

The direct current voltage application unit 150 may apply direct current voltages, ground and high, alternately to the respective electrodes 120 in sequential order at preset intervals.

In this case, the droplet moves on the surface of the hydrophobic layer 140 in a direction from an electrode to which a ground voltage is applied to an electrode to which a high voltage is applied, ultimately moving to the outermost edge of the hydrophobic layer 140 and enabling the substrate 110 to be cleaned.

In another embodiment, as shown in FIG. 3, the cleaning device 100 may include a cover glass 110, electrodes 120, a dielectric layer 130, a hydrophobic layer 140, and an alternating current voltage application unit 160.

That is, in the cleaning device 100 of another embodiment, the cover glass 110, the electrodes 120, the dielectric layer 130 and the hydrophobic layer 140 all remain the same, with the direct current voltage application unit 150 replaced by the alternating current voltage application unit 160.

The alternating current voltage application unit 160 may apply an alternating current voltage to the electrodes 120 and droplets on the surface of the hydrophobic layer 140 oscillate according as the alternating current voltage is applied to the electrodes 120.

Then by the slope of the substrate 110, the droplet moves along the slope towards the outer edge of the hydrophobic layer 140, enabling the substrate 110 to be cleaned.

In still another embodiment, the cleaning device 100 may include a cover glass 110, electrodes 120, a dielectric layer 130, a hydrophobic layer 140, a direct current voltage application unit 150, an alternating current voltage application unit 160, and a voltage mode selection unit (not shown).

In other words, in the cleaning device 100 of another embodiment, the cover glass 110, the electrodes 120, the dielectric layer 130, the hydrophobic layer 140, the direct current voltage application unit 150, and the alternating current voltage application unit 160 all remain the same, with the voltage mode selection unit added.

Depending on the setup of the windshield, the voltage mode selection unit allows a voltage to be applied to the electrodes 120 when the user uses either the direct current voltage application unit 150 or the alternating current voltage application unit 160, depending on the user's choice between removing the droplet by applying a direct current voltage to the electrodes 120 on one hand, and removing the droplet by oscillation after applying an alternating current voltage on the other.

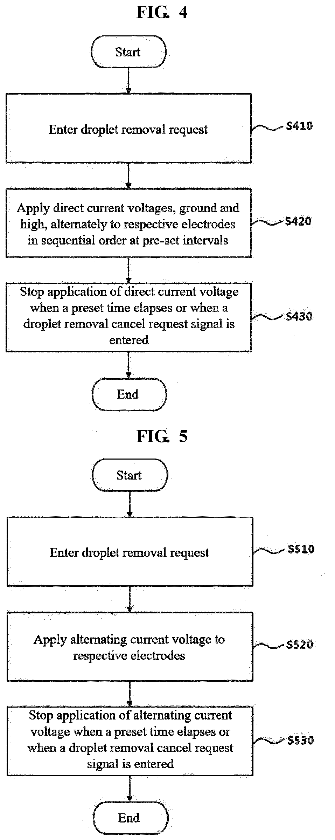

FIG. 4 is a flow chart illustrating a cleaning process according to one embodiment of the invention, and FIG. 5 is a flow chart illustrating a cleaning process according to another embodiment of the invention.

FIG. 4 and FIG. 5 represent the cleaning device 100 as coupled to an electronic system in the vehicle that can be manipulated by the driver, and the following describes the flow charts of FIG. 4 and FIG. 5, with the cleaning device 100 shown in FIG. 2 and FIG. 3 as subject-matter.

In steps of S410 and S510, the cleaning device 100 receives a droplet removal request signal through the electronic system manipulated by the driver.

In a step of s420, the cleaning device 100 applies direct current voltages, ground and high, alternately to the respective electrodes 120 in sequential order at preset intervals according to the received droplet removal request signal.

In this case, a droplet on the surface of the hydrophobic layer 140 moves towards the outer edge of the hydrophobic layer 140 by the direct current voltages applied, ground and then high alternately, enabling the substrate 110 to be cleaned.

In another embodiment, as shown in FIG. 5, following S510, when an alternating current voltage is applied to the electrodes 120 in a step of S520, the droplet on the surface of the hydrophobic layer 140 starts oscillating by the applied alternating current voltage and moves towards the outer edge of the hydrophobic layer 140 along the slope of the substrate 110, enabling the substrate 110 to be cleaned.

In steps of S430 and S530, when a preset time elapses or when a droplet removal cancel request signal is entered by the driver, the cleaning device 100 stops applying either the direct current voltage or the alternating current voltage to the respective electrodes.

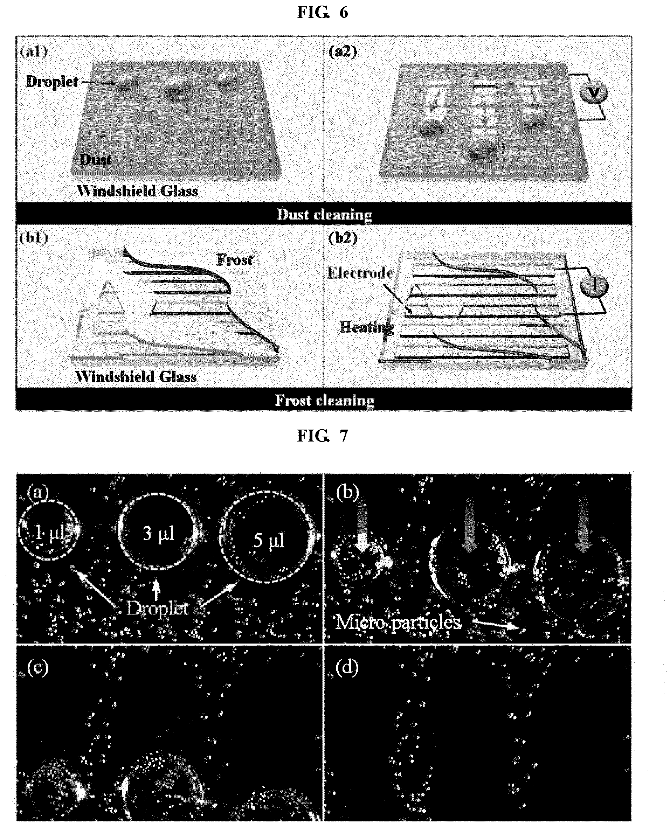

FIG. 6 is a view illustrating the actual cleaning process of the cleaning device according to another embodiment of the invention. That is, FIG. 6 shows the cleaning device 100 of the lens unit removing dust and frost on the windshield 110.

Referring to FIG. 6, the cleaning device 100 of the present embodiment may cause a droplet to roll off or move on a surface on which dust is stuck. Since the droplet adsorbs surrounding dust as it moves, the cleaning device 100 may remove the dust stuck on the surface while at the same time removing the droplet.

In one embodiment, heat occurs at the electrodes 120 of the cleaning device 100 under the same mechanism as the one for the hot wire of an insulator, which allows frost on the surface to be removed.

FIG. 7 is a scene in which the cleaning device is actually used according to one embodiment of the invention.

Respective droplets as large as 1µℓ, 3µℓ, and 5µℓ have formed on the surface of the hydrophobic layer 140.

For reference, the multiple electrodes 120 are transparent electrodes.

In the state of a, when ground and high direct current voltages are applied alternately in sequential order at preset intervals or when an alternating current voltage is applied, the respective droplets start moving downwards as shown in b and c, ultimately enabling the surface to be cleaned as shown in d. Of course, as shown in FIG. 7, fine particles may remain.

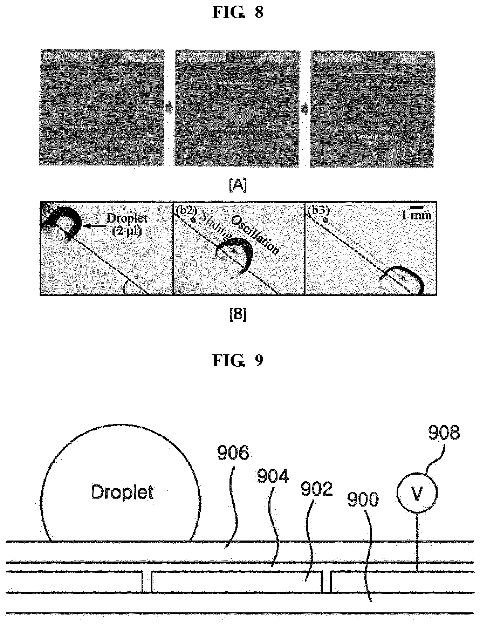

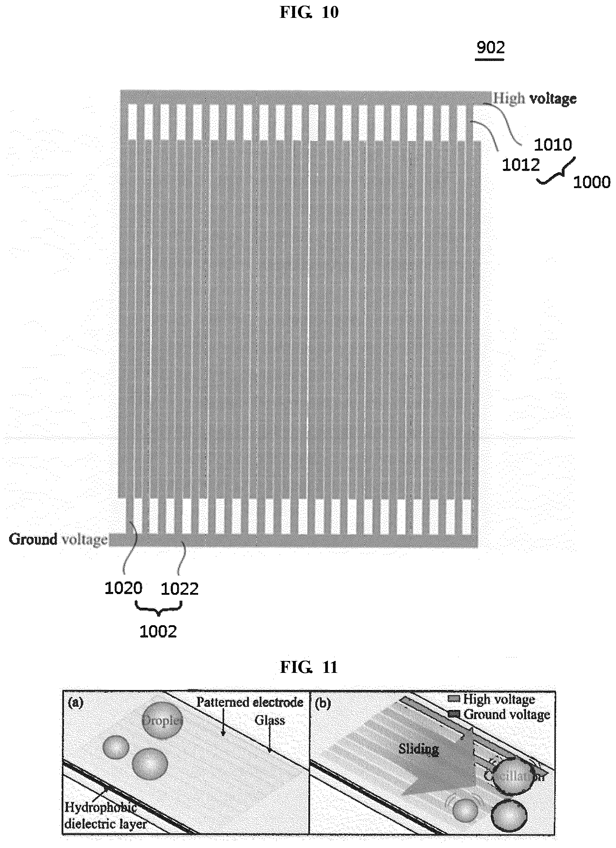

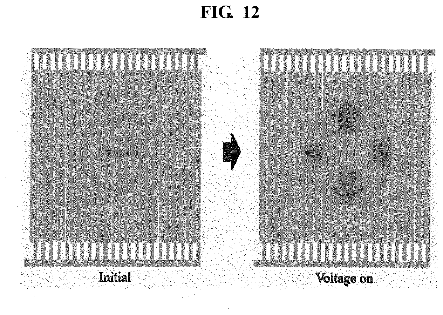

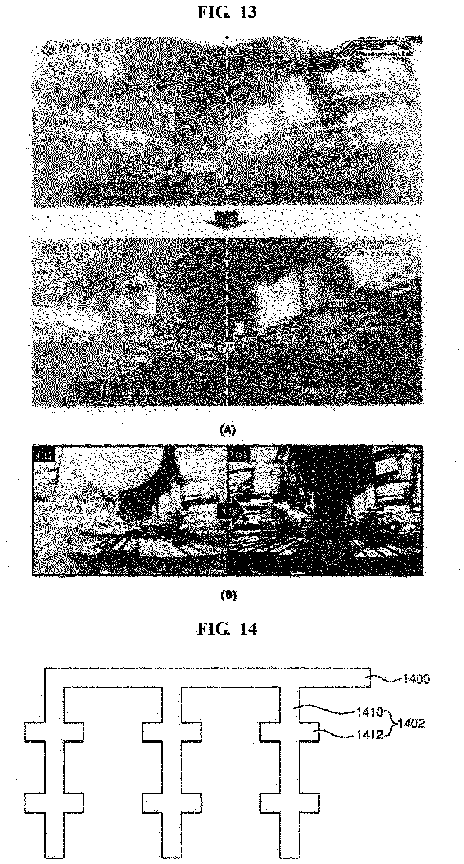

FIG. 8 is a view illustrating a droplet removal process of the cleaning device according to one embodiment of the invention, and FIG. 9 is a view schematically illustrating the structure of the cleaning device according to one embodiment of the invention. FIG. 10 is a view illustrating the pattern of electrodes according to one embodiment of the invention, and FIG. 11 is a view illustrating the flow of a droplet when the droplet is removed according to one embodiment of the invention. FIG. 12 is a view illustrating a variation in the contact angle of a droplet when the droplet is removed according to one embodiment of the invention, and FIG. 13 is a view illustrating the result of a droplet removal experiment.

A in FIG. 8 shows a change on a surface of a camera as the cleaning device of the invention, and B in FIG. 8 illustrates the movement of a droplet on the glass structure of the invention.

As shown in A of FIG. 8, when a certain voltage is applied to the electrodes when a droplet gets stuck on the camera surface, then, as shown in the right image, the droplet in a cleaning area of the camera surface gets removed, subsequently making the cleaning area clear. Here, the cleaning area is an area required for photographing and may correspond to a lens unit.

As shown in B of FIG. 8, when a certain voltage is applied to the electrodes when a droplet gets stuck on the surface of the glass structure, a droplet such as a raindrop moves in a direction of gravity along the slope of the glass structure. Consequently, the droplet gets removed.

In particular, since the glass structure of the invention utilizes the electrowetting-on-dielectric technique, the droplet may be quickly removed because the electrowetting-on-dielectric technique characteristically provides fast response.

The cleaning device for removing the droplets as described above, particularly a part of the cleaning device corresponding to the cleaning area, may have the structure as shown in FIG. 9.

Referring to FIG. 9, the cleaning device of the present embodiment may include a base layer 900, electrodes 902, a dielectric layer 904, and a hydrophobic layer 906.

The base layer 900 may be a cover glass that protects the cleaning device from external contamination and shock and may be disposed on, for example, a lens unit (not shown).

In one embodiment, the base layer 900 may be non-wettable glass.

The electrodes 902 may be, for instance, transparent electrodes made up of ITO and may be disposed on the base layer 900 with a certain pattern.

In one embodiment, as shown in FIG. 10, the electrodes 902 may include a first electrode 1000 with a comb structure and a second electrode 1002 with a comb structure.

The first electrode 1000 may include a first base pattern 1010 and at least one first branch pattern 1012.

A portion of the first base pattern 1010 is electrically connected to a power source 908 or ground, and a certain voltage is applied to the first base pattern 1010 by the power source or the ground. Meanwhile, the power source 908 may be located inside the cleaning device or outside of it.

The first branch patterns 1012 are formed as lengthwise extensions from the first base pattern 1010 in the direction in which they cross over, or preferably vertical to, the first base pattern 1010. As a result, when a specific voltage is applied to the first base pattern 1010, that certain voltage will be supplied to the first branch patterns 1012 as well.

In one embodiment, first branch patterns 1012 extend from the first base pattern 1010, and the first branch patterns 1012 may have equal intervals in between. Of course, insofar as first branch patterns 1012 are crisscrossed with second branch patterns 1020, some of the intervals among the first branch patterns 1012 may differ.

The second electrode 1002 may include a second base pattern 1022 and at least one second branch pattern 1020.

A portion of the second base pattern 1022 is electrically connected to the power source 908 or ground, and a certain voltage is applied to the second base pattern 1022 by the power source 908 or the ground.

The second branch patterns 1020 are formed as lengthwise extensions from the second base pattern 1022 in the direction in which they are crisscrossed with, or preferably perpendicular to, the second base pattern 1022. Consequently, when a certain voltage is applied to the second base pattern 1022, that certain voltage will be supplied to the second branch patterns 1020 as well.

Furthermore, as shown in FIG. 10, the second branch patterns 1020 are crisscrossed with the first branch patterns 1012. However, the first branch patterns 1012 and the second branch patterns 1020may be physically separated.

In one embodiment, the second branch patterns 1020 extend from the second base pattern 1022 and the second branch patterns 1020 may have equal gaps in between. Of course, insofar as first branch patterns 1012 are crisscrossed with second branch patterns 1020, some of the gaps among the second branch patterns 1020 may differ.

Meanwhile, in order to cause an oscillation on the surface of the cleaning device, a first voltage may be applied to either the first electrode 1000 or the second electrode 1002 and a second voltage lower than the first voltage may be applied to the other. Here, the first voltage may be a positive voltage and the second voltage may be a ground voltage.

Now referring to FIG. 9, the dielectric layer 904 is disposed on the electrodes 902 and may fill the gaps between the electrodes 1000 and 1002.

In one embodiment, the dielectric layer 904 may contain more than one type of material selected from a group including parylene C, teflon, and metal oxides.

The hydrophobic layer 906 is formed on the dielectric layer 904 and may be made up of a fluid like water and a material with low hydrophilicity. Consequently, a droplet may easily move on the surface of the hydrophobic layer 906.

The following describes the cleaning operation performed by the cleaning device having the above-described structure.

For example, when the user enters a droplet removal command, the power supply 908, as controlled by the control unit, applies a first voltage to either of the electrodes 100 and 1002 and then applies a second voltage lower than the first voltage to the other electrode. As a result, a droplet formed on the surface of the cleaning device oscillates.

The oscillation on the surface of the cleaning device decreases the force of adhesion between the surface and the droplet. In this case, since the surface of the cleaning device is tilted in the direction of gravity, the droplet on the surface slides in the direction of gravity, as shown in FIG. 11, and ends up departing from the cleaning device. In other words, the droplet gets removed from the cleaning device.

Particularly, since the cleaning device in the present embodiment uses the electrowetting-on-dielectric technique, it ensures fast droplet removal and efficiency.

In one embodiment, a variation in contact angle in an oscillating droplets moving direction and the direction opposite to the moving direction may be different from that in other direction. Such a difference may be useful in causing the droplet to slide. Additionally, a difference in the contact angle variation may also cause the droplet to slide in the direction of gravity and get removed despite the low slope of the surface of the cleaning device.

In another embodiment, the electrodes 1000 and 1002 have a comb pattern and the branch patterns 1012 and 1020 may be oriented in the direction of gravity. Accordingly, as shown in FIG. 12, when a droplet oscillates by application of a certain voltage, the contact angle variation of the droplet increases in a direction of the orientation of the branch patterns 1012 and 1020.

That is, the direction in which the droplet slides is identical or similar to the direction in which the electrodes 1000 and 1002 are oriented, thereby enabling the droplet to slide more easily when the droplet oscillates. Therefore, even if a far lower voltage is applied to the electrodes 1000 and 1002, the droplet may be easily removed.

Viewed from another perspective, if the cleaning device is implemented in such a way that a contact angle variation of a droplet is greater in the direction in which the droplet slides, namely, the direction of gravity, than a contact angle variation in any other direction, then the droplet may be easily removed.

The following examines the results of an actual experiment.

The results of an experiment, wherein an ordinary camera and a camera to which the cleaning device of the present invention was applied were mounted on an actual vehicle and the vehicle was driven on a rainy day, revealed that, as shown in A of FIG. 13, the droplet raindrop was removed from the surface of the camera to which the cleaning device was applied, enabling the image to be photographed far more clearly.

Furthermore, the results of an experiment, wherein an actual vehicle used the glass structure herein described as its windshield on a rainy day, revealed that, as shown in B of FIG. 13, the droplet was perfectly removed from the windshield, making the windshield clear.

FIG. 14 is a view schematically illustrating the electrodes of the cleaning device according to another embodiment of the invention. However, since the electrodes share the same structure despite their different orientations, only one electrode is shown. Of course, the branches of the electrodes may be arranged so that they are crisscrossed.

Referring to FIG. 14, one of the electrodes may include a base pattern 1400 and at least one branch pattern 1402.

The branch pattern 1402 may include a branch member 1410 and at least one protrusion 1412 protruding from the branch member 1410. That is, unlike the branch pattern shown in FIG. 10, the branch pattern 1402 in the present embodiment may include at least one protrusion 912. When such a protrusion 1412 is created, it can widen the overall surface area of the electrode.

Of course, the branch patterns of the electrodes may be arranged in a crisscross pattern similar to the branch patterns shown in FIG. 10.

In addition to the cleaning device in the above-described embodiments, various modifications can be made to the structure of the cleaning device insofar as the cleaning device thus implemented can remove droplets.

In one embodiment, the cleaning device may include an oscillation unit that reduces the force of adhesion between a droplet on the surface and the surface of the cleaning device by making the droplet oscillate. The oscillation unit has a certain pattern. Moreover, the surface of the cleaning device is tilted in the direction of gravity, and because the pattern is oriented in the same direction as the moving direction of the droplet, the droplet moves in the former direction.

Of course, depending on the oscillation, a variation in the contact angle of the droplet in the moving direction and the direction opposite to the moving direction may be greater than a contact angle variation in any other direction.

In another embodiment, the cleaning device may include an oscillation unit that reduces the force of adhesion between a droplet adhering to the surface and the surface of the cleaning device by making the droplet oscillate. Here, the surface of the cleaning device has a structure that allows a variation in the contact angle of the droplet in its moving direction and in the direction opposite to the moving direction to be greater than a contact angle variation of the droplet in other directions when the droplet oscillates and starts to move.

Meanwhile, the oscillation unit comprises electrodes; however, the electrodes may be oriented in the same direction as the moving direction of the droplet.

In still another embodiment, the cleaning structure may include a base layer, first electrode and second electrode disposed on the base layer, and a droplet support layer placed on the electrodes. Here, the droplet support layer may include a dielectric layer and a hydrophobic layer. Furthermore, the first electrode and the second electrode are physically separated and placed in a crisscross pattern.

In still another embodiment, the cleaning structure comprises a base layer, electrodes disposed on the base layer and a droplet support layer placed on the electrodes. Here, the electrode may have a pattern structure that allows a variation in the contact angle of the droplet in its moving direction when the droplet oscillates and moves on the droplet support layer to be different from a contact angle variation of the droplet in other directions.

In still another embodiment, the cleaning structure comprises a base layer, electrodes disposed on the base layer and a droplet support layer placed on the electrodes. Here, when a droplet on the droplet support layer moves, it moves in the same direction as the one in which the electrodes or the droplet support layer are oriented.

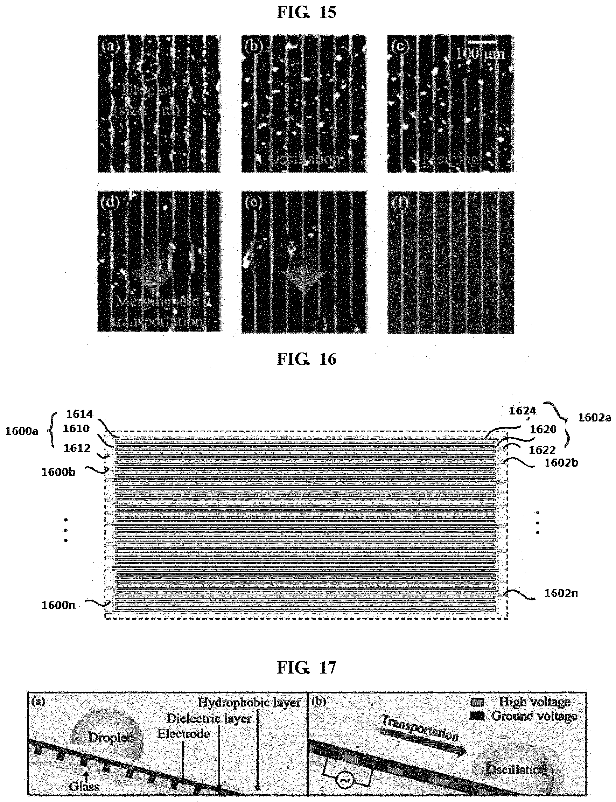

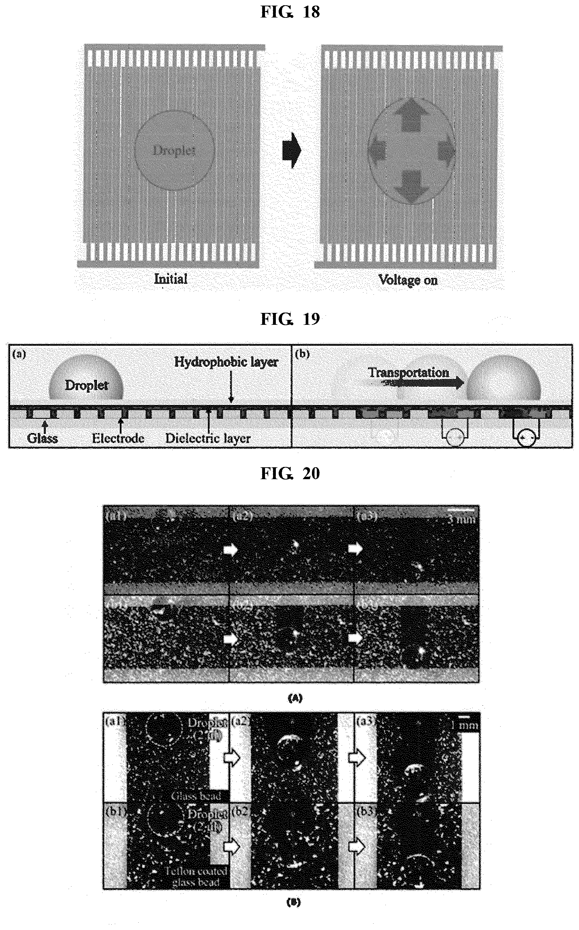

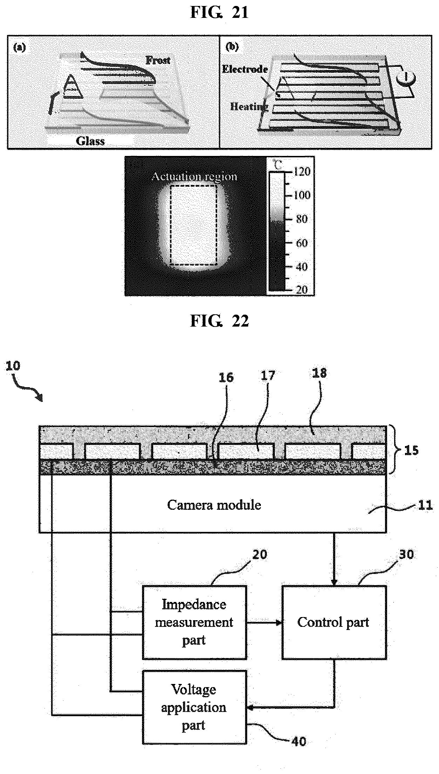

FIG. 15 is a view illustrating a process of droplet removal by the cleaning device according to one embodiment of the invention. FIG. 16 is a view illustrating the pattern of electrodes according to one embodiment of the invention, and FIG. 17 is a view illustrating the flow of a droplet when the droplet is removed according to one embodiment of the invention. FIG. 18 is a view illustrating a variation in the contact angle of a droplet when the droplet is removed according to one embodiment of the invention, and FIG. 19 is a view illustrating the flow of a droplet when the droplet is removed according to another embodiment of the invention. FIG. 20 and FIG. 21 are views illustrating the results of a droplet removal experiment.

FIG. 15 shows a change in the surface of the cleaning device in the invention. As shown in FIG. 15, after a droplet has adhered to the surface of the cleaning device, when a certain voltage is applied to the electrodes, the droplet gets removed from the surface, making the surface clear, as shown in the right image.

The cleaning device for removing such droplets as described above may have the structure shown in FIG. 9. However, the structure of the electrode 902 is different from the structure of FIG. 10.

In one embodiment, the electrodes 902 may comprise the first electrode 1600 and second electrode 1602 as shown in FIG. 16.

The first electrode 1600 may include first sub-electrodes 1600a to 1600n and the second electrode 1602 may also comprise second sub-electrodes 1602a to 1602n. Of course, the number of the first sub-electrodes 1600a to 1600n is preferably the same as the number of the second sub-electrodes 1602a to 1602n, but they may differ.

The first sub-electrodes 1600a to 1600n may each have a comb structure, and the second sub-electrodes 1602a to 1602n may also each have a comb structure.

The first sub-electrodes 1600a to 1600n are physically separated from one another, and the second sub-electrodes 1602a to 1602n are also physically separated from one another. In addition, the first sub-electrodes 1600a to 1600n and the second sub-electrodes 1602a to 1602n are physically separated.

Viewed from the overall shape, the first electrode 1600 and the second electrode 1602 may each have a comb pattern.

The following describes the structures of the sub-electrodes 1600a to 1600n, and 1602a to 1602n as represented by the first sub-electrode 1600a and the second sub-electrode 1602a. Though not illustrated here, other sub-electrodes 1600b to 1600n, and 1602b to 1602n have structures identical or similar to those of the other sub-electrodes 1600a, 1602a.

The first sub-electrode 1600a may include a first base pattern 1610, a first input pattern 1612 and at least one first branch pattern 1614.

The first base pattern 1610 is connected to the first input pattern 1612 and performs the role of transferring a certain voltage supplied through the first input pattern 1612 to the first branch patterns 1614.

The first input pattern 1612 is electrically connected to either a power source 908 or ground. As a result, a certain voltage is supplied to the first input pattern 1612. Meanwhile, the power source 908 may be located inside the cleaning device or outside of it.

In another embodiment, no first input pattern 1612 may exist, but a certain voltage may be supplied to a portion of the first base pattern 1610. Accordingly, a portion of the first base pattern 1610 may have a structure electrically connected to the power source 908 or ground.

The first branch patterns 1614 are formed as lengthwise extensions from the first base pattern 1610 in the direction in which they are crisscrossed with, or preferably perpendicular to, the first base pattern 1610. Consequently, when a certain voltage is applied to the first base pattern 1610, that certain voltage will be supplied to the first branch patterns 1614 as well.

In one embodiment, the first branch patterns 1614 extend from the first base pattern 1610, and the first branch patterns 1614 may have equal intervals gaps in between. Of course, insofar as first branch patterns 1614 are crisscrossed with second branch patterns 1624, some of the gaps among the first branch patterns 1614 may differ.

The second sub-electrode 1602a may include a second base pattern 1620, a second input pattern 1622 and at least one second branch pattern 1624.

The second base pattern 1620 is connected to the second input pattern 1622 and performs the role of transferring a certain voltage supplied through the second input pattern 1622 to the second branch patterns 1624.

] The second input pattern 1622 is electrically connected to either a power source 908 or ground. As a result, a certain voltage is supplied to the second input pattern 1622.

In another embodiment, no second input pattern 1622 may exist, but a certain voltage may be supplied to a portion of the second base pattern 1620. Therefore, a portion of the second base pattern 1620 may have a structure electrically connected to the power source 908 or ground.

The second branch patterns 1624 are formed as lengthwise extensions from the second base pattern 1620 in the direction in which they are crisscrossed with, or preferably perpendicular to, the second base pattern 1620. Consequently, when a certain voltage is applied to the second base pattern 1620, that certain voltage will be supplied to the second branch patterns 1624 as well.

Furthermore, as shown in FIG. 16, the second branch patterns 1624 are crisscrossed with the first branch patterns 1614. However, the first branch patterns 1614 and the second branch patterns 1624 may be physically separated.

In one embodiment, the second branch patterns 1624 extend from the second base pattern 1620, and the second branch patterns 1624 may have equal gaps in between. Of course, insofar as first branch patterns 1614 are crisscrossed with second branch patterns 1624, some of the gaps among the second branch patterns 1624 may differ.

According to the crisscross, the second branch patterns 1624 that are physically separated may be arranged in between the first branch patterns 1614, and the first branch patterns 1614 that are physically separated may be arranged in between the second branch patterns 1624.

Meanwhile, in order to remove a droplet from the surface of the cleaning device, a first voltage is applied to either the first electrode 1600a or the second electrode 1602a and a second voltage lower than the first voltage may be applied to the other. Here, the first voltage may be a positive voltage and the second voltage may be a ground voltage.

Now referring to FIG. 9, the dielectric layer 904 is disposed on the electrodes 1600 and 1602 and may fill the gaps between the electrodes.

The following describes the cleaning operation performed by the cleaning device having the above-described structure.

To begin with, below describes the cleaning operation performed using the alternating current method.

For example, when the user enters a droplet removal command, the power supply 908, as controlled by the control unit, applies a first voltage to either of the electrodes 1600 and 1602 and then applies a second voltage lower than the first voltage to the other electrode. Consequently, a droplet on the surface of the cleaning device oscillates. Here, the first voltage may be simultaneously applied to all of the sub-electrodes 1600a to 1600n of the electrodes 1600, and the second voltage may be simultaneously applied to all of the sub-electrodes 1602a to 1602n of the electrode 1602.

An oscillation occurring on the surface of the cleaning device reduces the force of adhesion between the droplet and the surface. Since the surface of the cleaning device is tilted in the direction of gravity, the droplet on the surface slides in the direction of gravity, as shown in FIG. 17, and ends up departing from the cleaning device. In other words, the droplet gets removed by the cleaning device.

Particularly, since the cleaning device in the present embodiment uses the electrowetting-on-dielectric technique, it ensures fast droplet removal and efficiency.

In one embodiment, a variation in contact angle in an oscillating droplets moving direction and the direction opposite to the moving direction may be different from contact angle variations in other directions. Such a difference may be useful in causing the droplet to slide. Furthermore, a difference in the contact angle variation may also cause the droplet to slide in the direction of gravity and get removed despite the low slope of the surface of the cleaning device.

In another embodiment, the electrodes 1600 and 1602 may have a comb pattern and the branch patterns 1612 and 1620 may be oriented in the direction of gravity. As a result, as shown in FIG. 5, when a droplet oscillates by application of a certain voltage, the contact angle variation of the droplet increase in a direction of the orientation of the branch patterns 1612 and 6020.

That is, the direction in which the droplet slides is identical or similar to the direction in which the electrodes 1600 and 1602 are oriented, thereby enabling the droplet to slide more easily when the droplet oscillates. Accordingly, even if a far lower voltage is applied to the electrodes 1600 and 1602, the droplet may be easily removed.

Viewed from another perspective, if the cleaning device is implemented in such a way that a contact angle variation of a droplet is greater in the direction in which the droplet slides, namely, the direction of gravity, than a contact angle variation in any other direction, then the droplet can be easily removed.

Next, below describes the cleaning operation performed using the direct current method.

The direct current method is a method by which a certain voltage is applied in sequential order to the sub-electrodes 1600a to 1600n, and 1602a to 1602n.

For example, a first voltage, a positive voltage, is applied to the sub-electrodes 1600a and a second voltage lower than the first voltage is applied to the sub-electrodes 1602a corresponding to the first sub-electrodes 1600a. Here, the second voltage may be a ground voltage and the other sub-electrodes 1600a to 1600n, and 1602b to 1602n remain inactive. Consequently, the droplet placed on the sub-electrodes 1600a and 1602a moves in the direction in which the first voltage has been applied.

Subsequently, the first voltage is applied to the sub-electrode 1600b and the second voltage may be applied to the sub-electrode 1602b corresponding to the sub-electrode 1600b. Here, the other sub-electrodes 1600a, 1600c to 1600n, and 1600c to 1602n remain inactive. As a result, the droplet moved from the sub-electrodes 1600a and 1602a and the droplet on the sub-electrodes 1600b and 1602b move in the direction in which the first voltage has been applied.

The above-described sequential voltage application process is performed until the voltages are applied to the final sub-electrodes 1600n and 1602n, and this sequential voltage application process is shown in FIG. 6.

Following up to this is a repeatedly-performed process whereby the voltages are applied in sequential order to the sub-electrodes 1600a to 1600n, and 1602a to 1602n. Consequently, the droplet adhering to the surface of the cleaning device may be easily removed.

Meanwhile, in the direct current method, a variation in the contact angle of a droplet in the droplets moving direction can be greater than a contact angle variation in the direction opposite to the moving direction.

The following describes the results of an actual experiment, a of FIG. 20 represents the process of removing droplet and hydrophilic dust and b of FIG. 20 shows the process of removing droplet and hydrophobic dust.

The results of an experiment, wherein the cleaning device of the present invention was mounted on an actual vehicle and the vehicle was driven on a rainy day, revealed that, as shown in a of FIG. 20, the droplet raindrop was removed from the cleaning device, enabling the image to be photographed far more clearly. Particularly, as shown in a of FIG. 20, the results show that in addition to the droplet, dust was simultaneously removed.

Furthermore, the results of an experiment, wherein an actual vehicle used the glass structure herein described as its windshield on a rainy day, revealed that, as shown in b of FIG. 20, the droplet was perfectly removed from the windshield, making the windshield clear. Particularly, in addition to the droplet, dust was simultaneously removed.

Moreover, as shown in FIG. 21, it was found that the frost that occurred on the surface of the cleaning device was removed.

In addition to the cleaning device in the above-described embodiments, various modifications can be made to the structure of the cleaning device insofar as the cleaning device thus implemented can remove droplets, dust, or frost.

In one embodiment of the invention, the cleaning device comprises an oscillation unit that causes a droplet adhering to the surface to oscillate and thereby reduces the force of adhesion between the droplet and the surface of the cleaning device. The oscillation unit has a certain pattern. Furthermore, the surface of the cleaning device is tilted in the direction of gravity and, because the pattern is oriented in the same direction as the moving direction of the droplet, the droplet moves in the former direction.

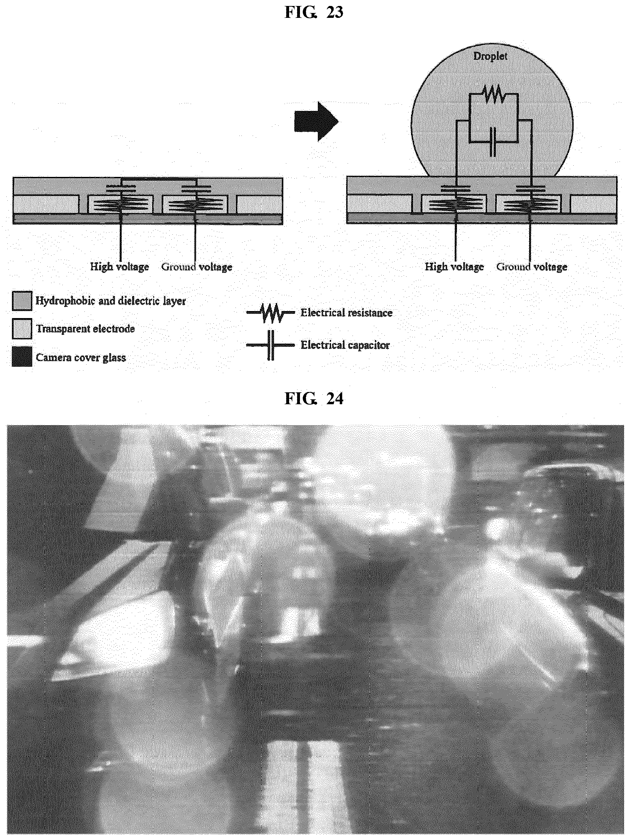

FIG. 22 is a view schematically illustrating the structure of the camera droplet detection apparatus according to a preferred embodiment of the invention, FIG. 23 is a view illustrating a variation in the impedance of the camera cover glass depending on the presence of a droplet, and FIG. 24 is a view illustrating an example of an image photographed when a droplet occurs on the camera cover glass. The following describes the structure of the camera droplet detection apparatus according to an embodiment of the invention with reference to FIG. 22, but also with reference to FIG. 23 and FIG. 24.

To begin with, referring to FIG. 22, the camera droplet detection apparatus of the present embodiment includes a camera unit 10, an impedance measurement unit 20, a control unit 30, and a voltage application unit 40.

The camera unit 10 comprises a camera module 11 and camera cover glass 15 for covering the lens of the camera module 11.

The camera module 11 produces an image by photographing an object through the lens. For example, the camera module 11 may include a lens module, which is made up of elements made from a transparent material such as glass made either spherical or aspheric and produces an optical image by causing light rays to converge or diverge; an image sensor which converts the optical image thus produced into electrical signals; and a PCB comprising various circuits that process the electrical signals produced by the image sensor.

The camera cover glass 15 includes a cover glass layer 16, transparent electrodes 17 and a hydrophobic and dielectric layer 18.

The cover glass layer 16 is the bottommost layer of the camera cover glass 15 and serves as a substrate for the camera cover glass 15 while also directly covering the lens of the camera module 11.

The transparent electrodes 17 are placed in series on top of the cover glass layer 16 and form a pre-set pattern. For example, the transparent electrodes 17 may form a straight line, a stream line, or a hook shape. There is no limit to what type of pattern may be formed by the multiple transparent electrodes 17.

The hydrophobic and dielectric layer 18 is the uppermost layer of the camera cover glass 15 and, when stacked on top of the multiple transparent electrodes 17 as shown in FIG. 22, fills the gaps between the respective transparent electrodes 17.

For example, the hydrophobic and dielectric layer 18 may contain more than one type of material selected from a group including parylene C, teflon, and metal oxides.

Furthermore, a droplet forms on the surface of the hydrophobic and dielectric layer 18.

For example, the hydrophobic and dielectric layer 18 may be made up of a fluid like water and a material with low hydrophilicity and consequently, a droplet may easily move on the surface of the hydrophobic and dielectric layer 18.

The impedance measurement unit 20 measures the impedance of the transparent electrodes 17. To that end, a micro voltage may be frequently applied to the transparent electrodes 17 by the voltage application unit 40. For example, ground and high voltages, both direct-current voltages, may be applied at micro levels every two transparent electrodes 17.

The control unit 30 determines whether a droplet has occurred on the camera cover glass 15 using the impedance of the transparent electrodes 17 measured by the impedance measurement unit 20 or using an image taken by the camera module 11.

That is, the control unit 40 checks the impedance of the transparent electrodes 17 measured by the impedance measurement unit 20 and, if the impedance changes, determines that a droplet has occurred on the camera cover glass 15.

For example, referring to FIG. 23, as shown on the left side of FIG. 23, the transparent electrodes 17 and hydrophobic and dielectric layer 18 of the camera cover glass 15 may respectively have a resistance component and a capacitor component. Also, as shown on the right side of FIG. 23, a droplet occurring on the hydrophobic and dielectric layer 18 surface of the camera cover glass 15 may have a resistance component and a capacitor component. Therefore, when a droplet occurs on the hydrophobic and dielectric layer 18 surface of the camera cover glass 15, the impedance changes on the transparent electrodes 17 at a location where the droplet has occurred.

Furthermore, the control unit 40 analyzes the image photographed by the camera module 11 and, if the analysis result finds the image to have any distortion in a certain round shape, may determine that a droplet has occurred on the camera cover glass 15. For example, as shown in FIG. 24, if many droplets occur on the camera cover glass 15, a photographed image may have distortions in certain round shapes.

Here, the control unit 40 may inspect the image for the presence of round droplet forms or calculate the clarity of the image in order to decide if the image has a distortion in a certain round shape.

In other words, the control unit 40 may determine that the image has distortions in certain round shape if many round droplet forms are detected, or if the clarity of the image falls short of the pre-set clarity standard.

Also, the control unit 30 controls the voltage application unit 40 in such a way that it applies a voltage to the transparent electrodes 17 if a droplet occurs on the camera cover glass 15.

Controlled by the control unit 30, the voltage application unit 40 applies a voltage to the transparent electrodes 17 in order to remove a droplet that has occurred on the camera cover glass 15.

That is, the voltage application unit 40 may alternately apply ground and high voltages, both direct current voltages, to the respective transparent electrodes 17 at pre-set intervals.

For example, a droplet on the surface of the hydrophobic and dielectric layer 18 moves from an electrode to which a ground voltage has been applied to an electrode to which a high voltage has been applied, and ultimately moves to the outermost edge of the hydrophobic and dielectric layer 18, enabling the camera cover glass 15 to be cleaned.

Or, the voltage application unit 40 may apply an alternating current voltage to the transparent electrodes 17.

For example, when an alternating current voltage is applied to the transparent electrode 17, a droplet forming on the surface of the hydrophobic and dielectric layer 18 oscillates by the alternating current voltage applied to the transparent electrode 17. When the droplet oscillates and moves to the outermost edge of the hydrophobic and dielectric layer 18 along the slope of the camera cover glass 15, enabling the camera cover glass 15 to be cleaned.

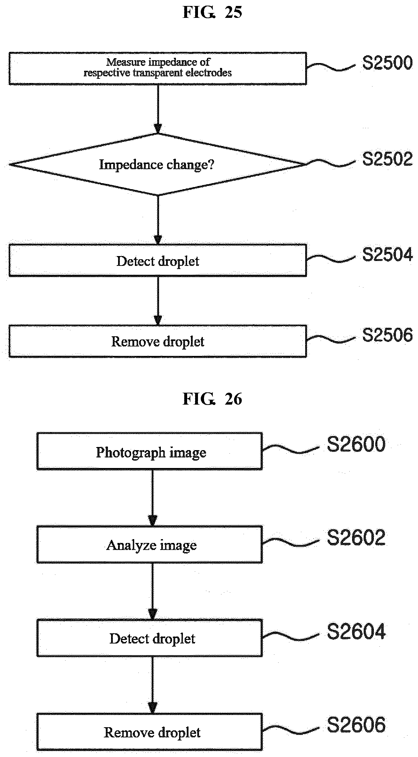

FIG. 25 is a flow chart illustrating the camera droplet detection method according to one embodiment of the invention.

In a step of S2500, the camera droplet detection apparatus measures the impedance of the respective transparent electrodes 17 of the camera cover glass 15.

In a step of S2502, the camera droplet detection apparatus checks if the impedance of any of the measured transparent electrode 17 changes.

In a step of S2504, the camera droplet detection apparatus determines that a droplet has been detected if the impedance of the transparent electrode 17 has changed.

In a step of S2506, the camera droplet detection apparatus removes the droplet by applying a voltage to the transparent electrodes 17 after the droplet has been detected.

FIG. 26 is a flow chart illustrating the camera droplet detection method according to another embodiment of the invention.

In a step of S2600, the camera droplet detection apparatus photographs an image using the camera module 11.

In a step of S2602, the camera droplet detection apparatus analyzes the photographed image.

In a step of S2604, the camera droplet detection apparatus determines that a droplet has been detected if the result of an analysis of the photographed image finds the image to have any distortion in a certain round shape.

Here, the camera droplet detection apparatus inspects the image for the presence of round droplet forms or calculates the clarity of the image before deciding that the image has distortions in certain round shape if many round droplet forms are detected, or if the clarity of the image falls short of the pre-set clarity standard.

In a step of S2606, the camera droplet detection apparatus removes the droplet by applying a voltage to the transparent electrode 17 upon the droplet being detected.

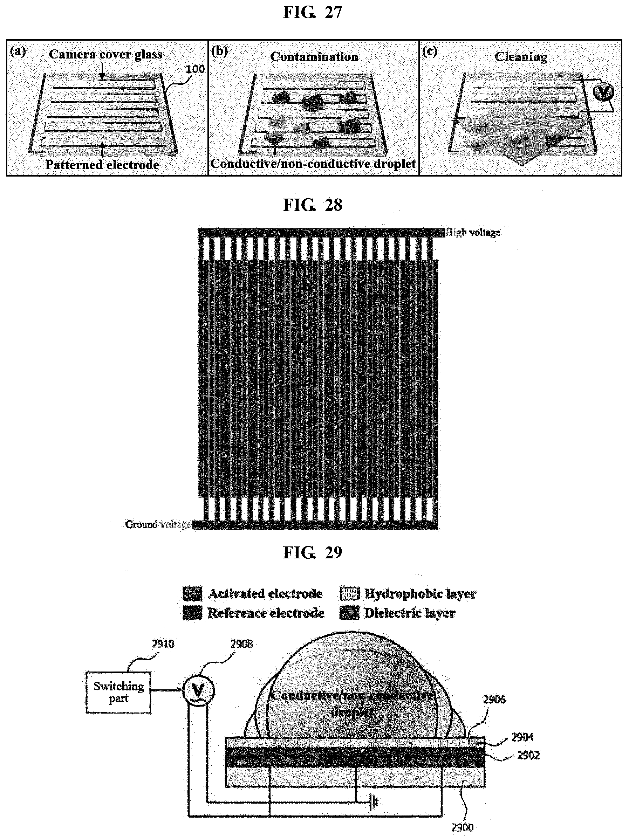

FIG. 27 is a view illustrating the cleaning device according to one embodiment of the invention, and FIG. 28 is a view illustrating the pattern of the electrodes of the cleaning device according to one embodiment of the invention.

The cleaning device of the present embodiment may be applied to the cover glass of a camera lens as shown in FIG. 27. Of course, according to a preferred embodiment of the invention, the cleaning device may be applied to all objects that require removal of droplets forming on surfaces like windshields in addition to the cover glass of camera lenses, and the following description assumes, for an understanding of the invention and for the sake of convenience, that the cleaning device 100 in a preferred embodiment of the invention is applied to the cover glass of a camera lens.

The cleaning device 100 may have a patterned structure of multiple electrodes separate from one another on top of a microchip manufactured through the MEMS process and can remove a droplet forming on the surface by applying a DC voltage or an AC voltage to the multiple electrodes.

For example, the cleaning device may change the surface tension of a droplet by applying differing direct current voltages high and ground alternately to the respective electrodes. In this case, the droplet will move from an electrode to which a high voltage has been applied, to an electrode to which a ground voltage has been applied i.e., towards the outer edge of the camera lens.

Furthermore, the cleaning device may change the surface tension of a droplet by causing the droplet to oscillate by application of a low-frequency alternating current voltage to the electrodes. As shown in FIG. 27, if the camera lens has some degree of slope relative to the flat surface, the droplet will move downwards while oscillating i.e., towards the outer edge of the camera lens cover glass.

Particularly, the cleaning device 100 according to embodiment of the invention applies a low-frequency alternating current voltage as well as a high-frequency alternating current voltage based on the frequency pre-set to the multiple electrodes in order to remove not only conductive but also non-conductive droplets. In other words, the cleaning device applies a high-frequency alternating current voltage to the multiple electrodes and switches on/off the applied high-frequency alternating current voltage to low frequency, simultaneously applying both high-frequency and low-frequency alternating current voltages to the multiple electrodes, thereby removing both non-conductive and conductive droplets.

Here, a reference frequency for dividing the high frequency and the low frequency may be 1kHz. The high frequency means a frequency more than the reference frequency, and the low frequency indicates a frequency smaller than the reference frequency.

For example, the high frequency may be 10kHz, and the low frequency may be 31Hz. It is verified through experiment that nonconductive droplet and conductive droplet are removed under such condition.

For reference, if only a low frequency voltage is applied to the multiple electrodes, the conductive droplet oscillates at a low frequency and moves because surface tension changes periodically, while the nonconductive droplet remains unchanged.

When the high frequency voltage is applied to multiple electrodes, conductive droplet and nonconductive droplet flatten on the surface.

On the other hand, if the high-frequency alternating current voltage applied to the multiple electrodes is switched on/off to low frequency, both conductive and non-conductive droplets repeatedly flatten on the surface and oscillate on a periodic basis, move by such oscillation, and eventually get removed.

In one embodiment of the invention, the multiple electrodes are divided into multiple high voltage electrodes and multiple ground voltage electrodes, and the high voltage electrodes and ground voltage electrodes are placed alternately in series as they remain physically separated on the cover glass surface of the camera lens. Here, the multiple high voltage electrodes and multiple ground voltage electrodes come integrated respectively, allowing high voltage electrodes to be connected to one another and ground voltage electrodes to one another.

For example, referring to FIG. 28, the high voltage electrodes and ground voltage electrodes each have a comb structure and may be placed in an interlocking pattern without coming into contact with one another.

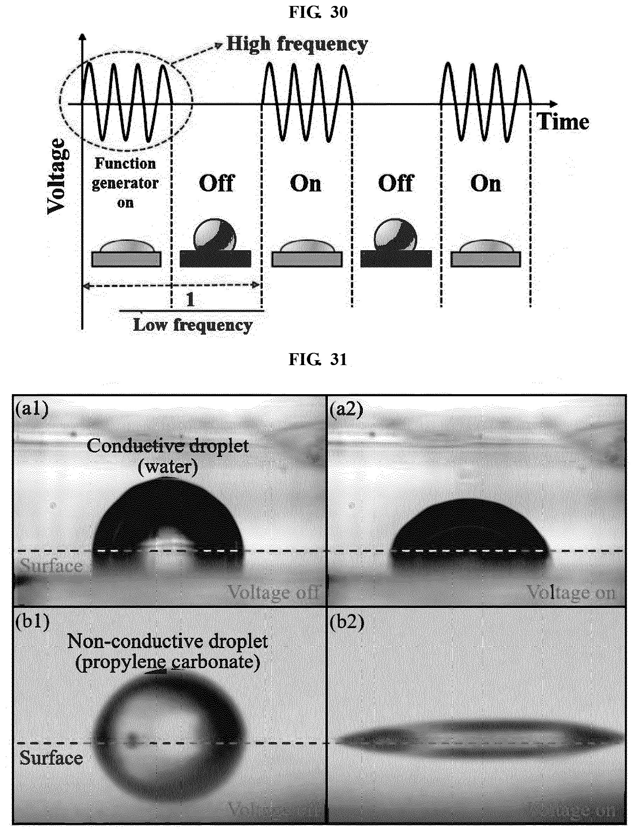

FIG. 29 is a view schematically illustrating the structure of the cleaning device according to one embodiment of the invention, and FIG. 30 to FIG. 33 are views explaining the cleaning device according to one embodiment of the invention. The following describes the cleaning device in one embodiment of the invention based on FIG. 29, but also with reference to FIG. 30 to FIG. 33.

The cleaning device of the present embodiment includes a substrate 2900, electrodes 2902, a dielectric layer 2904, a hydrophobic layer 2906, a voltage application unit 2908 and a switching unit 2910.

The substrate 2900 is the bottommost layer of the cleaning device and serves as a base for the cleaning device.

Meanwhile, the electrodes 2902 are transparent electrodes and may form a certain pattern as they are placed in series on top of the substrate 2900.

In other words, as described in FIG. 28, the electrodes 2902 are placed in series so that the multiple high voltage electrodes in an integrated form and the multiple ground voltage electrodes in an integrated form alternate.

Meanwhile, as shown in FIG. 29, the dielectric layer 2904 is stacked on the electrodes 2902 and may fill the gaps between the respective electrodes 2902.

The hydrophobic layer 2906 is the uppermost layer of the cleaning device, has a droplet form on its surface, and may be made up of a fluid like water and a material with low hydrophilicity. Therefore, a droplet may easily move on the surface of the hydrophobic layer 2906.

The voltage application unit 2908 applies an alternating current voltage at a higher frequency than the reference frequency preset to the electrodes 2902.

The switching unit 2910 switches on/off the high-frequency alternating current voltage to lower frequency than the high frequency alternating current voltage. For example, the switching unit 2910 may control the voltage application unit 2908 so that it may generate high frequency alternating current voltages in a period corresponding to low frequency. Or, the switching unit 2910 may switch on/off the high frequency alternating current voltage produced from the voltage application unit 2908 between the voltage application unit 2908 and the electrodes 2902.

By switching high frequency alternating current voltages on/off, the switching unit 2910 may generate low frequency alternating current voltages and conductive and nonconductive droplets forming on the surface of the hydrophobic layer 2906 start oscillating as high-frequency alternating current voltage and low-frequency alternating current voltage are simultaneously applied to the electrodes 120.

If the substrate 2900 has some degree of slope relative to the flat surface, the droplet moves to the outer edge of the hydrophobic layer 2906 along the slope of the glass 110, enabling the substrate 2900 to be cleaned.

In another embodiment, the cleaning device may include a frequency generating unit (not shown) that causes high-frequency and low-frequency voltages at the same time, in place of the voltage application unit 2908 and the switching unit 2910.

The frequency generating unit applies a certain voltage to the electrodes 2902 while controlling all frequencies both higher and lower than the reference frequency so that they occur all at once within a single period. Then, as high-frequency and low-frequency voltages are applied to the electrodes 2902, both conductive and non-conductive droplets are removed, enabling the substrate 2900 to be cleaned.

For example, referring to FIG. 30, if a high-frequency alternating current voltage applied to the electrodes 2902 is switched on/off to a relatively lower frequency, the angle of contact between the droplet and the surface of the hydrophobic layer 2906 repeatedly changes, causing both non-conductive and conductive droplets to oscillate regularly
In other words, a conductive droplet oscillates by the principle of electrowetting-on-dielectric when a low-frequency alternating current voltage is applied to the electrodes 2902, while a nonconductive droplet oscillates by the principle of dielectrophoresis when a high-frequency alternating current voltage is applied to the electrodes 120. Here, the principle of dielectrophoresis refers to an event in which a nonpolar particle exposed to an irregular alternating current electric field induces a dipole and becomes subject to a force in a direction where the field has a large gradient or the one where it has a small gradient.

For example, referring to FIG. 31, as shown in a of FIG. 31, a conductive droplet may have surface tension change by the principle of electrowetting-on-dielectric, causing the contact angle between the droplet and the surface of the hydrophobic layer 2906 to change. And as shown in b of FIG. 31, for the nonconductive droplet, surface tension changes by the principle of dielectrophoresis, causing the contact angle between the droplet and the surface of the hydrophobic layer 2906 to change.

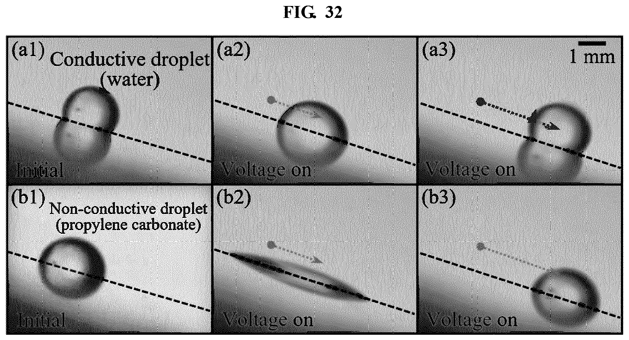

When droplets occurring on the surface of the hydrophobic layer 2906 oscillate, adhesion decreases between the droplet and the surface of the hydrophobic layer 2906. So if the surface of the hydrophobic layer 2906 is tilted, when the cleaning device operates according to the invention, as shown in FIG. 32, the droplet occurring on the surface of the hydrophobic layer 2906 may slide towards the bottom due to the pull of gravity, a of FIG. 32 represents a conductive droplet oscillating and sliding while b represents a non-conductive droplet oscillating and sliding.

And if the hydrophobic layer 2906 has a tilted surface, when a droplet occurring on the hydrophobic layer 2906 surface oscillates, it causes a difference between the contact angle in the droplet's moving direction and the contact angle in the direction opposite to the moving direction. Such a difference helps the droplet slide downwards, allowing the droplet to slide even on the surface of a hydrophobic layer 2906 with a very small slope.

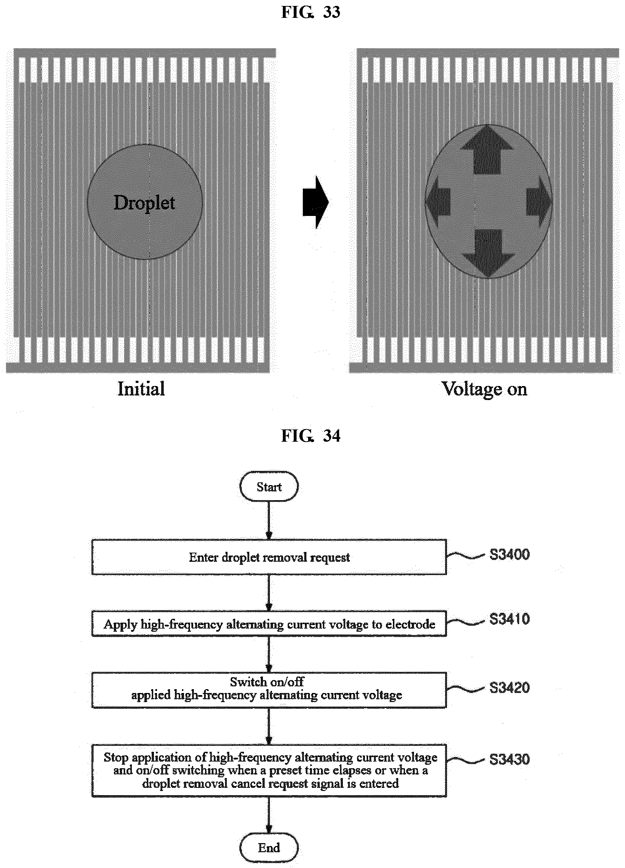

Also, since the electrodes 2902 are created in a comb structure as described in FIG. 28, the angle of contact between droplet and hydrophobic layer 2906 surface is not regular in all directions, but tends to be greater in the direction in which the electrodes 2902 are oriented, as shown in FIG. 33. In addition, a contact angle difference, which occurs between a droplet's moving direction and the opposite direction when the droplet oscillates on a sloped surface, also tends to be greater in the direction of the orientation. As described above, since the contact angle difference between the droplet's moving direction and the opposite direction helps the droplet slide, the droplet's sliding direction and the orientation of the electrodes 2902 should be brought into alignment in order to make the droplet slide off at a lower voltage.

That is, the cleaning device in one embodiment of the invention is affected by not only the orientation of its electrodes but also the frequency of on/off switching, when it controls droplets. Since each droplet has a certain frequency unique to it depending on its size, by application of a voltage whose frequency corresponds to the frequency unique to a droplet that has occurred, the droplet will oscillate even more greatly and the droplet can slide more easily on the surface of the hydrophobic layer 2906.

FIG. 34 is a flow chart illustrating the cleaning method according to one embodiment of the invention.

In FIG. 34, the cleaning device in one embodiment of the invention may be integrated with a vehicle's camera module not shown for instance, AVMS: Around View Monitoring System and the following describe the flow chart of FIG. 32, with the cleaning device shown in FIG. 29 as subject-matter.

In a step of S3400, the cleaning device receives a droplet removal request signal from a vehicle's camera module in which the driver's request is entered.

In a step of S3410, the cleaning device applies a high-frequency alternating current voltage based on the frequency pre-set to the electrodes 120 according to the received droplet removal request signal.

In a step of S3420, the cleaning device switches the high-frequency alternating current voltage on/off to a frequency lower than the applied high-frequency alternating current voltage. Then, as the high-frequency alternating current voltage switches on/off, it generates a low-frequency alternating current voltage, and the conductive and nonconductive droplets that have formed on the surface of the hydrophobic layer 2906 start to oscillate as the high-frequency alternating current voltage and the low-frequency AC voltage are applied simultaneously.

Also, the nonconductive and conductive droplets slide downwards along the slope of the glass 2900 and move towards the outer edge of the hydrophobic layer 2906, enabling the glass 2900 to be cleaned.

In a step of S3430, the cleaning device stops application of high-frequency alternating current voltages and on/off switching of high-frequency alternating current voltages either when a preset time elapses or when a droplet removal cancel request signal is entered by the driver.

Hereinafter, a hydrophobic layer of the cleaning device according to the invention will be described in detail with reference to accompanying drawings.

A hydrophobic layer used for electrowetting-on-dielectric is generally made up of fluorinated material. This hydrophobic layer has excellent hydrophobic property, but its durability is weak. Accordingly, the hydrophobic layer is not proper to a cleaning device employed in a vehicle, a camera, etc. The invention provides a hydrophobic layer having excellent hydrophobic property and durability.

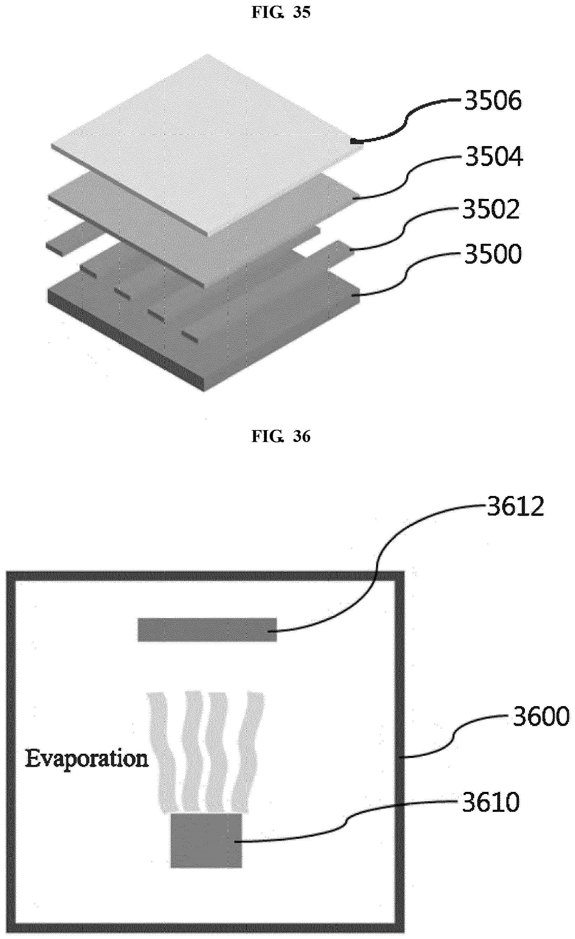

FIG. 35 is a view illustrating schematically a structure of a cleaning device according to one embodiment of the invention, and FIG. 36 is a view illustrating schematically a process of manufacturing a hydrophobic layer according to one embodiment of the invention.

In FIG. 35, a cleaning device of the present embodiment includes a substrate 3500, electrodes 3502 in preset pattern, a dielectric layer 3504 and a hydrophobic layer 3506.

Since the other elements except the hydrophobic layer 3506 are described in above description, any further description concerning the other elements will be omitted.

The hydrophobic layer 3506 may have excellent hydrophobic property and strong durability.

In one embodiment, the hydrophobic layer 3506 may comprise a fluorinated material (including fluorine compound containing fluorine atom) having water repellency, oil repellency and chemical resistance property and a silane material (including organic/inorganic silane compound) for aiding compounding of organic material and inorganic material.

The hydrophobic layer 3506 may have water repellency, oil repellency and chemical resistance property, and it may have stronger durability than the hydrophobic layer composed of fluorinated material.

The hydrophobic layer 3506 may have adequate durability though it has thin thickness, e.g. several dozen nm because it has strong durability. The hydrophobic layer 3506 may have excellent light transmission when it has thin thickness, thereby assuring adequately viewing angle of a glass of a vehicle or lens of a camera with removing easily droplets.

In one embodiment, the fluorine compound may contain fluorine atom of 49at% or more on its surface so that the surface is in hydrophobic characteristics. The fluorine compound may be a polymer having chemical formula of -CxFy-, CxFyHz-, - CxFyCzHp-, -CxFyO-, -CxFyNH- (each of x, y, z, p is natural integer) and so on, or amorphous fluorine compound, e.g. AF1600. Here, the surface of the hydrophobic layer 3506 may mean a thin layer corresponding to a distance of 50 angstrom to 100 angstrom from an upper surface in downward.

In one embodiment, the organic/inorganic silane compound may have one or more of amino group, vinyl group, epoxy group, alcoxyle, halogen, mercapto group, sulfide group, etc. Particularly, the organic/inorganic silane compound may be selected from a group including aminopropyltriethoxysilane, aminopropyl trimethoxysilane, amino-methoxy silane, penylaminopropyltrimethoxysilane, N-2-aminoethyl-3-aminopropyltrimethoxysilane, N-β -aminoethyl- γ -aminopropyhnethyl dimethoxysilane, γ - aminopropyltrimethoxysilane, γ -aminopropyldimethoxysilane, γ -aminopropyltriethoxysilane, γ - aminopropyldiethoxysilane, vinyltriethoxysilane, vinyltrimethoxysilane, vinyltrimethoxyethoxysilane, di-, tri-or tetraalkoxysilane, vinylmethoxysilane, vinyltrimethoxysilane, vinylethoxysilane, vinyltriepoxysilane, 3-glycidoxypropyltrimethoxysilane, 3-methacryloyloxypropyltrimethoxysilane, γ - glycidoxypropyltriethoxysilane, γ -methacryloyloxypropyltrimethoxysilane, chlorotrimethylsilane, trichloro-ethylsilane, trichloro-methylsilane, trichlorophenylsilane, trichlorovinylsilane, mercaptopropyltriethoxysilane, trifluoropropyltrimethoxysilane, bistrimethoxysilylpropylamine, bis3-triethoxysilylpropyltetrasulfide, bistriethoxysilylpropyldisulfide, methacryloyloxypropyltrimethoxysilane, 2-3,4-epoxycyclohexylethyltrimethoxysilane, 3-glycidoxypropylmethyldiethoxysilane, 3-glycidoxypropyldiethoxysilane, , 3-glycidoxypropyltriethoxysilane and p-styryltrimethoxysilane, and these compound. It is desirable that the organic/inorganic silane compound may be aminopropyltriethoxysilane or compound including the aminopropyltriethoxysilane.

In experimental result, a contact angle of the hydrophobic layer 3506 containing fluorinated material and silane material and droplet is measured to minimum 115°, and CAH is measured to maximum 7°. That is, the droplet may be well removed.

The contact angle is kept to 113 ° though1500 rubber friction is applied to the hydrophobic layer 3506 with a weight of 500g by using a rubber test equipment, and duration has minimum one year. In other words, it is verified that the hydrophobic layer 3506 has very excellent durability compared with conventional fluorine based hydrophobic layer (for example, Teflon).

Hereinafter, a process of manufacturing the hydrophobic layer 3506 will be described.

In FIG. 36, the hydrophobic layer 3506 may be manufactured in a vacuum chamber 3600.

A heating device 3610 and an object 3612 locate in the vacuum chamber 3600. The object 3612 may be fixedly supported in the vacuum chamber 3600. That is, a supporting member (not shown) for supporting the object 3612 may be formed in the vacuum chamber 3600.

The heating device 3610 changes hydrophobic material to steam by applying heat. The steam generated by the heating device 3610 is evaporated on the object 3612, and thus the hydrophobic layer 3506 is formed on the object 3612.

In one embodiment, the heating device 3610 may generate the steam by heating the hydrophobic material which is solid by using E-beam or electrical resistance heating. Here, the hydrophobic material may be compound of the fluorinated material and the silane material.

The object 3612 on which the hydrophobic layer 3506 is to be evaporated may be a structure in which the electrode 3502 and the dielectric layer 3504 are sequentially formed on the substrate 3500.

The steam generated by the heating device 3610 is evaporated on the object 3612, and thus the hydrophobic layer 3506 may be formed on the dielectric layer 3504.

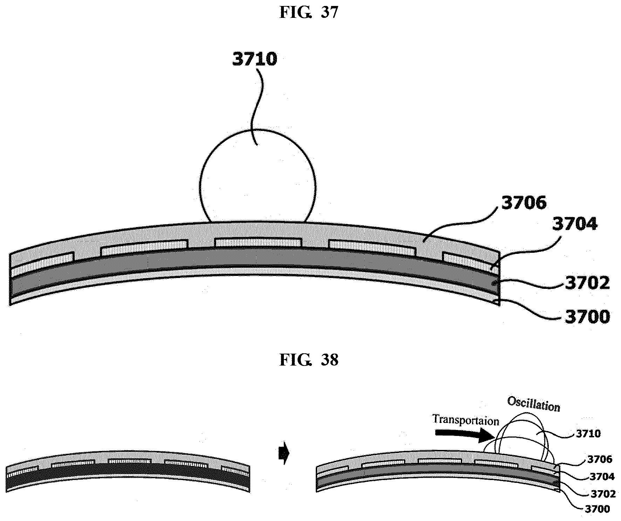

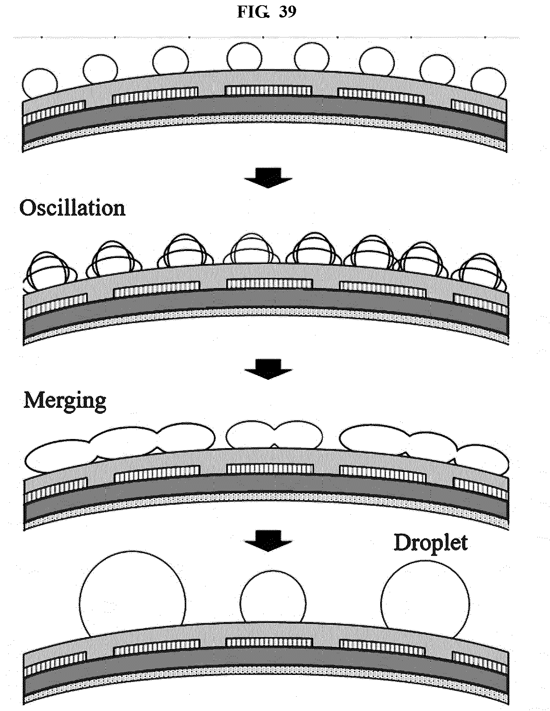

FIG. 37 is a sectional view illustrating a sticker type cleaning device according to still another embodiment of the invention, and FIG. 38 and FIG. 39 are views illustrating a process of removing droplet.

In FIG. 37, the cleaning device of the present embodiment may include a bonding layer 3700, a substrate 3702, electrodes 3704 and a dielectric layer 3706. A hydrophobic layer may be further formed on the dielectric layer 3706. Since the other elements except the boding layer 3700 are the same in above embodiments, any further description concerning the other elements will be omitted.

Unlike other embodiments, the bonding layer 3700 may be formed on a bottommost layer of the cleaning device. Accordingly, the cleaning device may be bonded to surfaces of various devices. For example, the cleaning device may be bonded to a camera, an image sensor, a windshield of a vehicle and a side mirror, an image monitor, a semiconductor device, etc. by using the bonding layer 3700. As a result, the device to which the cleaning device is bonded may remove droplet.

Particularly, the cleaning device may have a flexible structure if it is made up of flexible material, e.g. the substrate 3702 is made up of flexible material as shown in FIG. 37. Accordingly, the cleaning device may be adaptively bonded to a flexible structure.

This sticker type cleaning device is bonded to the devices not having droplet removal function, and the devices may realize the droplet removal function. It is expensive if a device not the droplet removal function is replaced with a device to which the cleaning device having the droplet removal function is installed. However, the device not having the droplet removal function may remove the droplet with saving cost if the sticker type cleaning device is bonded to it.

A method of driving the cleaning device is not mentioned, but every driving method (direct current applying method, alternating current applying method, method of applying alternately a low frequency voltage and a high frequency voltage, etc.) in above embodiments may be applied.

For example, a droplet 3710 is removed after moved as shown in FIG. 38 when the droplet 3710 is oscillated by applying an alternative voltage to electrodes 3704. Specially, conductive/nonconductive droplet 3710 may be removed after moved when the alternative voltage is applied to the electrodes 3704 using an on/off switching method. Furthermore, if many droplets exist on a surface of the cleaning device, the droplets are added to form a droplet in different size as shown in FIG. 39, and the droplet may be removed after moved. Here, size of droplets formed by adding may differ.

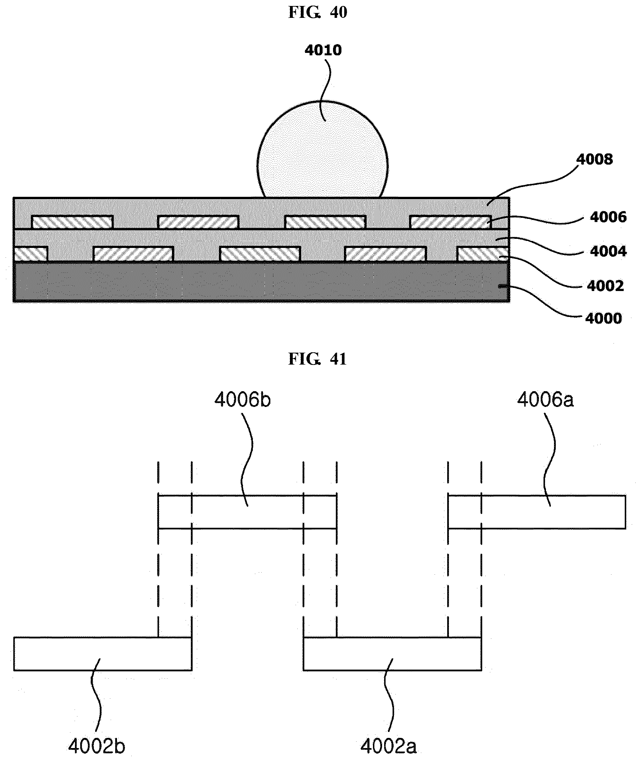

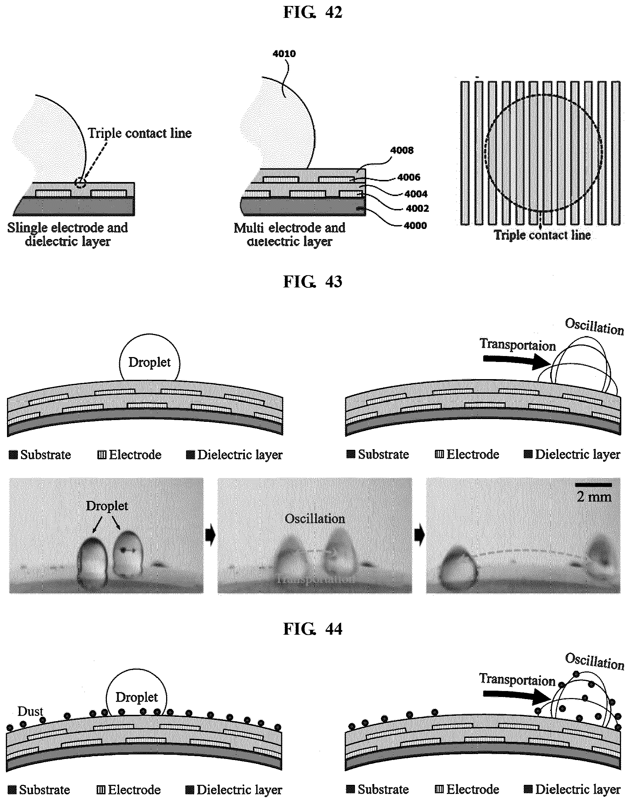

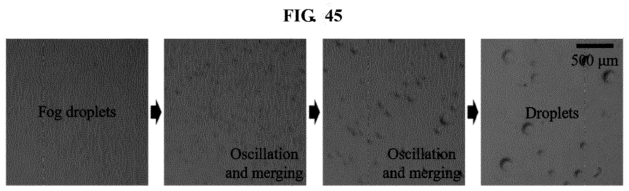

FIG. 40 is a sectional view illustrating a cleaning device according to still another embodiment of the invention, FIG. 41 is a sectional view illustrating array of electrodes according to one embodiment of the invention, and FIG. 42 is a view for describing triple contact line. FIG. 43 is a view illustrating a process of removing droplet, FIG. 44 is a view illustrating a process of removing dust, and FIG. 45 is a view illustrating a process of removing small scale droplet.

In FIG. 40, the cleaning device of the present embodiment may have a multilayer structure unlike other embodiments. FIG. 40 shows two layers, but the cleaning device may have three or more layers. It is assumed that the cleaning device has two layers for convenience of description.

The cleaning device may comprise a first layer and a second layer, wherein the first layer includes a substrate 4000, first electrodes 4002 and a first dielectric layer 4004, and the second layer has second electrodes 4006 and a second dielectric layer 4008. Of course, a hydrophobic layer may exist on the second dielectric layer 4008.

The first electrodes 4002 may be disposed in certain interval on the substrate 4000.

In one embodiment, a part of the first electrodes 4002 may operate as an electrode to which a positive voltage is applied, and the other first electrodes may operate as an electrode to which a ground voltage or a negative voltage is applied. For example, the first electrode to which the positive voltage is applied and the first electrode to which the negative voltage is applied may be alternately arrayed.

The first dielectric layer 4004 is formed on the first electrodes 4002 and may cover the first electrodes 4002.

The second electrodes 4006 may be disposed in certain interval on the first dielectric layer 4004. Here, the interval may be identical to or be different from that between the first electrodes 4002.

In one embodiment, a part of the second electrodes 4006 may operate as an electrode to which a positive voltage is applied, and the other second electrodes may operate as an electrode to which a ground voltage or a negative voltage is applied. For example, the second electrode to which the positive voltage is applied and the second electrode to which the negative voltage is applied may be alternately disposed.

The second electrodes 4006 may be separated from the first electrodes 4002 and the second electrodes 4006 and the first electrodes 4002 may be disposed in parallel. For example, the first electrodes 4002 and the second electrodes 4006 may be disposed in a horizontal direction of the cleaning device.

In another embodiment, the second electrodes 4006 may cross over the first electrodes 4002, for example the first electrodes 4002 and the second electrodes 4006 may be disposed in cross. For example, the first electrodes 4002 may be disposed in a horizontal direction of the cleaning device, and the second electrodes 4006 may be disposed in a vertical direction of the cleaning device.

Of course, two layers are shown in FIG. 40, but electrodes of respective layers may be more variously disposed when three or more layers exist. In this case, electrodes in two layers are disposed in parallel or cross each other.

The second dielectric layer 4008 may be formed on the second electrodes 4006 and cover the second electrodes 4006.

Briefly, the cleaning device may comprise multi layers, each of the multi layers including the electrode and the dielectric layer. Meanwhile, the cleaning device may have a plane structure as shown in FIG. 40, or have a flexible structure as shown in FIG. 43. For example, the substrate 4000 is made up of flexible material.

Additionally, the cleaning device may be produced in sticker type.

Hereinafter, disposition and effect of the electrodes 4002 and 4006 in the multi layer structure will be described in detail.

In FIG. 41, first electrodes 4002a and 4002b may be disposed in a certain interval, and second electrodes 4006a and 4006b may be disposed in a specific interval. Here, a positive voltage is applied to the first electrode 4002a, a ground voltage is applied to the first electrode 4002b, a positive voltage is applied to the second electrode 4006a, and a ground voltage is applied to the second electrode 4006b. Of course, various voltage applying methods may be used according to object, but it is not limited to the above voltage applying method.

In one embodiment, at least part of the first electrodes 4002 and the second electrodes 4006 may be overlapped. For example, a right end part of the first electrode 4002a may be overlapped with a left end part of the second electrode 4006a, a left end part of the first electrode 4002a may be overlapped with a right end part of the second electrode 4006b, a right end part of the first electrode 4002b may be overlapped with a left end part of the second electrode 4006b. Of course, disposition of the first electrodes 4002 and the second electrodes 4006 may be expanded in a unit of the disposition shown in FIG. 41.

In another view, the first electrodes 4002 may be disposed between the second electrodes 4006. As a result, the electrodes 4002 and 4006 may be disposed without empty space in the cleaning device.

Hereinafter, effect of the cleaning device when the electrodes 4002 and 4006 are disposed will be described.

Referring to FIG. 42, a triple contact line corresponding to an interface on which a droplet 4010 is contact with the surface of the cleaning device exists. An electrode may not be disposed just under the triple contact line as shown in a left drawing of FIG. 42 in a cleaning device having a single layer, but the electrode may be disposed just under the triple contact line. Accordingly, since electric field generated by the electrode affects directly to the droplet 4010 corresponding to the triple contact line, droplet removal effect in the cleaning device having the multi layer structure may be considerably higher than that in the cleaning device having the single layer structure.

Every applying method (direct current applying method, alternating current applying method, alternative applying method of the low frequency voltage and the high frequency voltage and so on) in above embodiments may be applied to the cleaning device having the multi layer structure.

For example, in the event that the droplet 4010 is oscillated by applying the alternating voltage to the electrodes 4002 and 4006, the droplets and dust may be removed after moved as shown in FIG. 43 and FIG. 44, and micro droplets may be smoothly removed as shown in FIG. 45. Specially, every of conductive droplets and nonconductive droplets may be removed when the alternating current voltage is applied to the electrodes 4002 and 4006 via the on/off switching method.

In one embodiment, a power applying to the first electrodes 4002 may be different from a power applying to the second electrodes 4006.

For example, an alternating current voltage applied to the first electrodes 4002 may be higher than that applied to the second electrodes 4006.

For another example, the same alternating current voltage is applied to the electrodes 4002 and 4006, a frequency of the alternating current voltage applied to the first electrodes 4002 being different from that applied to the second electrodes 4006.

Components in the embodiments described above can be easily understood from the perspective of processes. That is, each component can also be understood as an individual process. Likewise, processes in the embodiments described above can be easily understood from the perspective of components.

The embodiments of the invention described above are disclosed only for illustrative purposes. A person having ordinary skill in the art would be able to make various modifications, alterations, and additions without departing from the content of the claims set forth below,

## Claims

1. A cleaning device (100) comprising:
a substrate (4000); and
multi layers disposed sequentially on the substrate (4000),
wherein the multi layers include:
a first layer configured to have first electrodes (4002) formed on the substrate (4000) and a first dielectric layer (4004) covering the first electrodes (4002); and
a second layer configured to have second electrodes (4006) formed on the first dielectric layer (4004) and a second dielectric layer (4008) covering the second electrodes (4006),
and wherein the first electrodes (4002) are disposed in a specific interval, the second electrodes (4006) are disposed in a certain interval, the first electrodes (4002) located between the second electrodes (4006),
a droplet (4010) formed on a surface of the cleaning device (100) is removable when a voltage is applied to at least one of the first electrodes (4002) and the second electrodes (4006),
and wherein an interface on which the droplet (4010) is contact with a surface of the cleaning device (100) is defined as a triple contact line, the first electrode (4002) or the second electrode (4006) locates under every triple contact line, the first electrode (4002) and the second electrode (4006) are disposed in parallel or the first electrode (4002) crosses over the second electrode (4006), the cleaning device being **characterised in that** a first electrode (4002a) to which a positive voltage is applied is alternately disposed with a first electrode (4002b) to which a ground voltage or a negative voltage is applied, and a second electrode (4006a) to which a positive voltage is applied is alternately disposed with a second electrode (4006b) to which a ground voltage or a negative voltage is applied.

2. The cleaning device (100) of claim 1, wherein at least part of specific first electrode (4002) and corresponding second electrode (4006) is overlapped.

3. The cleaning device (100) of claim 2, wherein one end part of a specific second electrode (4006a) to which the positive voltage is applied is overlapped with an end part of the first electrode (4002a) to which the positive voltage is applied, the other end part of the specific second electrode (4006a) is overlapped with an end part of the first electrode (4002b) to which the ground voltage is applied,
one end part of the second electrode (4006b) to which the ground voltage is applied is overlapped with an end part of the first electrode (4002a) to which the positive voltage is applied, and the other part of the second electrode (4006b) is overlapped with an end part of the first electrode (4002b) to which the ground voltage is applied.

4. The cleaning device (100) of claim 2, wherein a method of applying the voltage to the first electrode (4002) is different from a method of applying the voltage to the second electrode (4006).

5. A cleaning device (100) comprising:
a substrate (4000); and
multi layers disposed sequentially on the substrate (4000),
wherein the multi layers include:
a first layer configured to have first electrodes (4002) formed on the substrate (4000) and a first dielectric layer (4004) covering the first electrodes (4002); and
a second layer configured to have second electrodes (4006) formed on the first dielectric layer (4004) and a second dielectric layer (4008) covering the second electrodes (4006),
and wherein the first electrodes (4002) are disposed in a specific interval, the second electrodes (4006) are disposed in a certain interval, the first electrodes (4002) located between the second electrodes (4006),
a droplet (4010) formed on a surface of the cleaning device (100) is removable when a voltage is applied to at least one of the first electrodes (4002) and the second electrodes (4006),
and wherein an interface on which the droplet (4010) is contact with a surface of the cleaning device (100) is defined as a triple contact line, the first electrode (4002) or the second electrode (4006) locates under the triple contact line, the first electrode (4002) and the second electrode (4006) are disposed in parallel,
the cleaning device being **characterised in that** it further comprises
a hydrophobic layer (140) formed on the second dielectric layer (4008); and
a voltage application unit (40, 2908) configured to apply an alternating current voltage to the first electrodes (4002) and the second electrodes (4006),
wherein the droplet (4010) oscillates continuously according as the alternating current voltage is applied to the electrodes, and the droplet (4010) is removed after moved in a specific direction depending on the oscillation.

6. A cleaning device (100) comprising:
a substrate (4000); and
multi layers disposed sequentially on the substrate (4000),
wherein the multi layers include:
a first layer configured to have first electrodes (4002) formed on the substrate (4000) and a first dielectric layer (4004) covering the first electrodes (4002); and
a second layer configured to have second electrodes (4006) formed on the first dielectric layer (4004) and a second dielectric layer (4008) covering the second electrodes (4006),
and wherein the first electrodes (4002) are disposed in a specific interval, the second electrodes (4006) are disposed in a certain interval, the first electrodes (4002) located between the second electrodes (4006),
a droplet (4010) formed on a surface of the cleaning device (100) is removable when a voltage is applied to at least one of the first electrodes (4002) and the second electrodes (4006),
and wherein an interface on which the droplet (4010) is contact with a surface of the cleaning device (100) is defined as a triple contact line, the first electrode (4002) or the second electrode (4006) locates under the triple contact line, the first electrode (4002) and the second electrode (4006) are disposed in parallel,
the cleaning device being **characterised in that** it further comprises:
a voltage application unit (40, 2908) configured to apply a high frequency alternating current voltage to the first electrodes (4002) and the second electrodes (4006) based on a preset reference frequency; and
a switching unit (2910) configured to switch the applied high frequency alternating current voltage,
wherein a low frequency alternating current voltage is generated by switching the high frequency alternating current voltage, and conductive droplets and nonconductive droplets are removable according as the high frequency alternating current voltage and the low frequency alternating current voltage generate in one period.

7. The cleaning device (100) of claim 1, wherein the substrate (4000) is made up of flexible material so that the cleaning device (100) can be flexible.

## Patentansprüche

1. Reinigungsvorrichtung (100) umfassend:
ein Substrat (4000); und
Multischichten, die sequenziell an dem Substrat (4000) angeordnet sind,
wobei die Multischichten umfassen:
eine erste Schicht, die dazu konfiguriert ist, erste Elektroden (4002), die an dem Substrat (400) gebildet sind, und eine erste dielektrische Schicht (4004) aufzuweisen, welche die ersten Elektroden (4002) bedeckt; und
eine zweite Schicht, die dazu konfiguriert ist, zweite Elektroden (4006), die an der ersten dielektrischen Schicht (4004) gebildet sind, und eine zweite dielektrische Schicht (4008) aufzuweisen, welche die zweiten Elektroden (4006) bedeckt,
und wobei die ersten Elektroden (4002) in einem spezifischen Intervall angeordnet sind, die zweiten Elektroden (4006) in einem bestimmten Intervall angeordnet sind, wobei sich die ersten Elektroden (4002) zwischen den zweiten Elektroden (4006) befinden,
ein Tropfen (4010), der an einer Oberfläche der Reinigungsvorrichtung (100) gebildet ist, entfernbar ist, wenn eine Spannung an wenigstens eine der ersten Elektroden (4002) und der zweiten Elektroden (4006) angelegt ist,
und wobei eine Schnittstelle, an welcher der Tropfen (4010) in Kontakt mit einer Oberfläche der Reinigungsvorrichtung (100) ist, als eine Dreifachkontaktleitung definiert ist, die erste Elektrode (4002) oder die zweite Elektrode (4006) sich unter jeder Dreifachkontaktleitung befindet, die erste Elektrode (4002) und die zweite Elektrode (4006) parallel angeordnet sind oder die erste Elektrode (4002) über die zweite Elektrode (4006) kreuzt, wobei die Reinigungsvorrichtung **dadurch gekennzeichnet ist, dass** eine erste Elektrode (4002a), an die eine positive Spannung angelegt ist, abwechselnd mit einer ersten Elektrode (4002b) angeordnet ist, an die eine Erdspannung oder eine negative Spannung angelegt ist, und eine zweite Elektrode (4006a), an die eine positive Spannung angelegt ist, abwechselnd mit einer zweiten Elektrode (4006b) angeordnet ist, an die eine Erdspannung oder eine negative Spannung angelegt ist.

2. Reinigungsvorrichtung (100) nach Anspruch 1, wobei wenigstens ein Teil einer spezifischen ersten Elektrode (4002) und entsprechenden zweiten Elektrode (4006) überlappt ist.

3. Reinigungsvorrichtung (100) nach Anspruch 2, wobei ein Endteil einer spezifischen zweiten Elektrode (4006a), an welche die positive Spannung angelegt ist, mit einem Endteil der ersten Elektrode (4002a) überlappt ist, an welche die positive Spannung angelegt ist, das andere Endteil der spezifischen zweiten Elektrode (4006a) mit einem Endteil der ersten Elektrode (4002b) überlappt ist, an welche die Erdspannung angelegt ist,
ein Endteil der zweiten Elektrode (4006b), an welche die Erdspannung angelegt ist, mit einem Endteil der ersten Elektrode (4002a) überlappt ist, an welche die positive Spannung angelegt ist, und das andere Teil der zweiten Elektrode (4006b) mit einem Endteil der ersten Elektrode (4002b) überlappt ist, an welche die Erdspannung angelegt ist.

4. Reinigungsvorrichtung (100) nach Anspruch 2, wobei ein Verfahren zum Anlegen der Spannung an die erste Elektrode (4002) unterschiedlich von einem Verfahren zum Anlegen der Spannung an die zweite Elektrode (4006) ist.

5. Reinigungsvorrichtung (100) umfassend:
ein Substrat (4000); und
Multischichten, die sequenziell an dem Substrat (4000) angeordnet sind,
wobei die Multischichten umfassen:
eine erste Schicht, die dazu konfiguriert ist, erste Elektroden (4002), die an dem Substrat (400) gebildet sind, und eine erste dielektrische Schicht (4004) aufzuweisen, welche die ersten Elektroden (4002) bedeckt; und
eine zweite Schicht, die dazu konfiguriert ist, zweite Elektroden (4006), die an der ersten dielektrischen Schicht (4004) gebildet sind, und eine zweite dielektrische Schicht (4008) aufzuweisen, welche die zweiten Elektroden (4006) bedeckt,
und wobei die ersten Elektroden (4002) in einem spezifischen Intervall angeordnet sind, die zweiten Elektroden (4006) in einem bestimmten Intervall angeordnet sind, wobei sich die ersten Elektroden (4002) zwischen den zweiten Elektroden (4006) befinden,
ein Tropfen (4010), der an einer Oberfläche der Reinigungsvorrichtung (100) gebildet ist, entfernbar ist, wenn eine Spannung an wenigstens eine der ersten Elektroden (4002) und der zweiten Elektroden (4006) angelegt ist,
und wobei eine Schnittstelle, an welcher der Tropfen (4010) in Kontakt mit einer Oberfläche der Reinigungsvorrichtung (100) ist, als eine Dreifachkontaktleitung definiert ist, die erste Elektrode (4002) oder die zweite Elektrode (4006) sich unter der Dreifachkontaktleitung befindet, die erste Elektrode (4002) und die zweite Elektrode (4006) parallel angeordnet sind,
wobei die Reinigungsvorrichtung **dadurch gekennzeichnet ist, dass** sie ferner eine hydrophobe Schicht (140), die an der zweiten dielektrischen Schicht (4008) gebildet ist; und
eine Spannungsanlegungseinheit (40, 2908) umfasst, die dazu konfiguriert ist, eine Wechselstromspannung an die ersten Elektroden (4002) und die zweiten Elektroden (4006) anzulegen,
wobei der Tropfen (4010) entsprechend kontinuierlich oszilliert, wenn die Wechselstromspannung an die Elektroden angelegt ist, und der Tropfen (4010) entfernt wird, nachdem er abhängig von der Oszillation in eine spezifische Richtung bewegt worden ist.

6. Reinigungsvorrichtung (100) umfassend:
ein Substrat (4000); und
Multischichten, die sequenziell an dem Substrat (4000) angeordnet sind,
wobei die Multischichten umfassen:
eine erste Schicht, die dazu konfiguriert ist, erste Elektroden (4002), die an dem Substrat (400) gebildet sind, und eine erste dielektrische Schicht (4004) aufzuweisen, welche die ersten Elektroden (4002) bedeckt; und
eine zweite Schicht, die dazu konfiguriert ist, zweite Elektroden (4006), die an der ersten dielektrischen Schicht (4004) gebildet sind, und eine zweite dielektrische Schicht (4008) aufzuweisen, welche die zweiten Elektroden (4006) bedeckt,
und wobei die ersten Elektroden (4002) in einem spezifischen Intervall angeordnet sind, die zweiten Elektroden (4006) in einem bestimmten Intervall angeordnet sind, wobei sich die ersten Elektroden (4002) zwischen den zweiten Elektroden (4006) befinden,
ein Tropfen (4010), der an einer Oberfläche der Reinigungsvorrichtung (100) gebildet ist, entfernbar ist, wenn eine Spannung an wenigstens eine der ersten Elektroden (4002) und der zweiten Elektroden (4006) angelegt ist,
und wobei eine Schnittstelle, an welcher der Tropfen (4010) in Kontakt mit einer Oberfläche der Reinigungsvorrichtung (100) ist, als eine Dreifachkontaktleitung definiert ist, die erste Elektrode (4002) oder die zweite Elektrode (4006) sich unter der Dreifachkontaktleitung befindet, die erste Elektrode (4002) und die zweite Elektrode (4006) parallel angeordnet sind,
wobei die Reinigungsvorrichtung **dadurch gekennzeichnet ist, dass** sie ferner umfasst:
eine Spannungsanlegungseinheit (40, 2908), die dazu konfiguriert ist, eine Hochfrequenz-Wechselstromspannung an die ersten Elektroden (4002) und die zweiten Elektroden (4006) basierend auf einer voreingestellten Referenzfrequenz anzulegen; und
eine Schalteinheit (2910), die dazu konfiguriert ist, die angelegte Hochfrequenz-Wechselstromspannung zu schalten,
wobei eine Niederfrequenz-Wechselstromspannung durch Schalten der Hochfrequenz-Wechselstromspannung erzeugt wird, und leitende Tropfen und nichtleitende Tropfen entsprechend entfernbar sind, wenn die Hochfrequenz-Wechselstromspannung und die Niederfrequenz-Wechselstromspannung in einer Periode erzeugt werden.

7. Reinigungsvorrichtung (100) nach Anspruch 1, wobei das Substrat (4000) aus einem flexiblen Material besteht, so dass die Reinigungsvorrichtung (100) flexibel sein kann.

## Revendications

1. Un dispositif de nettoyage (100) comprenant :
un substrat (4000) ; et
une pluralité de couches disposées séquentiellement sur le substrat (4000),
la pluralité de couches comprenant :
une première couche configurée pour avoir des premières électrodes (4002) formées sur le substrat (4000) et une première couche diélectrique (4004) recouvrant les premières électrodes (4002) ; et
une deuxième couche configurée pour avoir des deuxièmes électrodes (4006) formées sur la première couche diélectrique (4004) et une deuxième couche diélectrique (4008) recouvrant les deuxièmes électrodes (4006),
et les premières électrodes (4002) étant disposées dans un intervalle spécifique, les deuxièmes électrodes (4006) sont disposées dans un certain intervalle, les premières électrodes (4002) étant situées entre les deuxièmes électrodes (4006),
une gouttelette (4010) formée sur une surface du dispositif de nettoyage (100) est amovible lorsqu'une tension est appliquée à au moins l'une des premières électrodes (4002) et des deuxièmes électrodes (4006),
et une interface sur laquelle la gouttelette (4010) est en contact avec une surface du dispositif de nettoyage (100) est définie comme étant une triple ligne de contact, la première électrode (4002) ou la deuxième électrode (4006) se localisant sous chaque triple ligne de contact, la première électrode (4002) et la deuxième électrode (4006) étant disposées en parallèle ou la première électrode (4002) traversant la deuxième électrode (4006), le dispositif de nettoyage étant **caractérisé en ce qu'**une première électrode (4002a) à laquelle une tension positive est appliquée est disposée de façon alternée avec une première électrode (4002b) à laquelle une tension de masse ou une tension négative est appliquée, et une deuxième électrode (4006a) à laquelle une tension positive est appliquée est disposée de façon alternée avec une deuxième électrode (4006b) à laquelle une tension de terre ou une tension négative est appliquée.

2. Le dispositif de nettoyage (100) selon la revendication 1, dans lequel au moins une partie de la première électrode spécifique (4002) et de la deuxième électrode correspondante (4006) est en chevauchement.

3. Le dispositif de nettoyage (100) selon la revendication 2, dans lequel une partie d'extrémité d'une deuxième électrode spécifique (4006a) à laquelle la tension positive est appliquée est en chevauchement avec une partie d'extrémité de la première électrode (4002a) à laquelle la tension positive est appliquée, l'autre partie d'extrémité de la deuxième électrode spécifique (4006a) est en chevauchement avec une partie d'extrémité de la première électrode (4002b) à laquelle la tension de terre est appliquée,
une partie d'extrémité de la deuxième électrode (4006b) à laquelle la tension de terre est appliquée est en chevauchement avec une partie d'extrémité de la première électrode (4002a) à laquelle la tension positive est appliquée, et l'autre partie de la deuxième électrode (4006b) est en chevauchement avec une partie d'extrémité de la première électrode (4002b) à laquelle la tension de terre est appliquée.

4. Le dispositif de nettoyage (100) selon la revendication 2, dans lequel un procédé d'application de la tension à la première électrode (4002) est différent d'un procédé d'application de la tension à la deuxième électrode (4006).

5. Un dispositif de nettoyage (100) comprenant :
un substrat (4000) ; et
plusieurs couches disposées séquentiellement sur le substrat (4000),
la pluralité de couches comprenant :
une première couche configurée pour avoir des premières électrodes (4002) formées sur le substrat (4000) et une première couche diélectrique (4004) recouvrant les premières électrodes (4002) ; et
une deuxième couche configurée pour avoir des deuxièmes électrodes (4006) formées sur la première couche diélectrique (4004) et une deuxième couche diélectrique (4008) recouvrant les deuxièmes électrodes (4006),
et les premières électrodes (4002) étant disposées dans un intervalle spécifique, les deuxièmes électrodes (4006) étant disposées dans un certain intervalle, les premières électrodes (4002) étant situées entre les deuxièmes électrodes (4006),
une gouttelette (4010) formée sur une surface du dispositif de nettoyage (100) est amovible lorsqu'une tension est appliquée à au moins l'une des premières électrodes (4002) et des deuxièmes électrodes (4006),
et une interface sur laquelle la gouttelette (4010) étant en contact avec une surface du dispositif de nettoyage (100) est définie comme étant une triple ligne de contact, la première électrode (4002) ou la deuxième électrode (4006) se situant sous la triple ligne de contact, la première électrode (4002) et la deuxième électrode (4006) étant disposées en parallèle,
le dispositif de nettoyage étant **caractérisé en ce qu'**il comprend en outre
une couche hydrophobe (140) formée sur la deuxième couche diélectrique (4008) ; et
une unité (40, 2908) d'application de tension configurée pour appliquer une tension alternative aux premières électrodes (4002) et aux deuxièmes électrodes (4006),
la gouttelette (4010) oscille en continu selon que la tension alternative est appliquée aux électrodes, et la gouttelette (4010) est retirée après avoir été déplacée dans une direction spécifique en fonction de l'oscillation.

6. Un dispositif de nettoyage (100) comprenant :
un substrat (4000) ; et
une pluralité de couches disposées séquentiellement sur le substrat (4000),
la pluralité de couches comprenant :
une première couche configurée pour avoir des premières électrodes (4002) formées sur le substrat (4000) et une première couche diélectrique (4004) recouvrant les premières électrodes (4002) ; et
une deuxième couche configurée pour avoir des deuxièmes électrodes (4006) formées sur la première couche diélectrique (4004) et une deuxième couche diélectrique (4008) recouvrant les deuxièmes électrodes (4006),
et les premières électrodes (4002) étant disposées dans un intervalle spécifique, les deuxièmes électrodes (4006) étant disposées dans un certain intervalle, les premières électrodes (4002) étant situées entre les deuxièmes électrodes (4006),
une gouttelette (4010) formée sur une surface du dispositif de nettoyage (100) est amovible lorsqu'une tension est appliquée à au moins l'une des premières électrodes (4002) et des deuxièmes électrodes (4006),
et une interface sur laquelle la gouttelette (4010) est en contact avec une surface du dispositif de nettoyage (100) est définie comme étant une triple ligne de contact, la première électrode (4002) ou la deuxième électrode (4006) se situant sous la triple ligne de contact, la première électrode (4002) et la deuxième électrode (4006) étant disposées en parallèle,
le dispositif de nettoyage étant **caractérisé en ce qu'**il comprend en outre :
une unité d'application de tension (40, 2908) configurée pour appliquer une tension de courant alternatif haute fréquence aux premières électrodes (4002) et aux deuxièmes électrodes (4006) sur la base d'une fréquence de référence prédéfinie ; et
une unité de commutation (2910) configurée pour commuter la tension de courant alternatif haute fréquence appliquée,
une tension de courant alternatif basse fréquence étant générée par commutation de la tension de courant alternatif haute fréquence, et des gouttelettes conductrices et des gouttelettes non conductrices sont amovibles selon que la tension de courant alternatif haute fréquence et la tension de courant alternatif basse fréquence sont générées au cours d'une période.

7. Le dispositif de nettoyage (100) selon la revendication 1, dans lequel le substrat (4000) est constitué d'un matériau flexible de sorte que le dispositif de nettoyage (100) puisse être flexible.
